# EUROPÄISCHE PATENTSCHRIFT

(11) **EP 4 282 266 B1**
(45) Veröffentlichungstag und Bekanntmachung des Hinweises auf die Patenterteilung: **02.12.2026**
(21) Anmeldenummer: 23170930.4
(22) Anmeldetag: 02.05.2023
(51) Int. Cl.: A01M 7/00, A01C 23/00, A01C 15/00, A01C 15/04

(54) **LANDWIRTSCHAFTLICHE VERTEILMASCHINE MIT EINEM AUSLEGER**
AGRICULTURAL DISTRIBUTION MACHINE WITH A BOOM
MACHINE DE DISTRIBUTION AGRICOLE DOTÉE D'UN BRAS DE FLÈCHE

(30) Priorität: 27.05.2022 DE 202022102971 U
(43) Veröffentlichungstag der Anmeldung: 29.11.2023
(73) Patentinhaber: RAUCH Landmaschinenfabrik GmbH, 77836 Rheinmünster (DE)
(72) Erfinder: Gruber, Thomas Konrad, 85929 Penzing (DE); Stöcklin, Volker, 77975 Ringsheim (DE)
(74) Vertreter: Lichti - Patentanwälte Partnerschaft mbB

(56) Entgegenhaltungen:
- EP-A1- 0 464 291
- EP-A1- 1 481 586
- WO-A1-2012/149516
- DE-A1- 102019 007 650
- FR-A1- 3 064 156

## Beschreibung

Die Erfindung betrifft eine landwirtschaftliche Verteilmaschine, umfassend:
- wenigstens einen von einem Rahmen getragenen Vorratsbehälter zur Aufnahme von Verteilgut;
- wenigstens ein dem Vorratsbehälter nachgeordnetes Dosierorgan;
- wenigstens einen an dem Rahmen und/oder an dem Vorratsbehälter schwenkbar angeordneten Ausleger, welcher wenigstens drei sich vornehmlich in Erstreckungsrichtung des Auslegers erstreckende Längsstreben aufweist, von welchen zumindest zwei Längsstreben mittels einer Mehrzahl an Verbindungsstreben miteinander verbunden sind;
- eine Mehrzahl an von dem Ausleger getragenen und mit Abstand voneinander angeordneten Verteilorganen; und
- eine Mehrzahl an Förderleitungen, welche zur Überführung des Verteilgutes an die Verteilorgane dienen und von welchen zumindest endständige Förderleitungsabschnitte von dem Ausleger getragen sind,
wobei zumindest einige Verbindungsstreben mittels formstabiler Kopplungselemente jeweils an zwei benachbarten Längsstreben des Auslegers festgelegt sind, wobei die Kopplungselemente zwei benachbarte Längsstreben paarweise miteinander verbinden und an den beiden benachbarten Längsstreben festgelegt sind, und wobei die Kopplungselemente ferner erste Befestigungsmittel aufweisen, welche zur Befestigung der Verbindungsstreben an dem Kopplungselement dienen.

Landwirtschaftliche Verteilmaschinen der vorgenannten Art können einerseits in leichter Bauart als Anbaugeräte konzipiert sein, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen üblicherweise seitlich nach außen ragende Ausleger, welche an dem Rahmen und/oder an dem Vorratsbehälter der Verteilmaschine angelenkt sind und in unterschiedlichem Abstand voneinander endende Förderleitungsabschnitte aufnehmen. Insbesondere im Falle von verhältnismäßig großen Arbeitsbreiten, wie beispielsweise von etwa 18 m, 24 m, 30 m oder dergleichen, können die Ausleger eine Mehrzahl an schwenkbar aneinander angelenkten Auslegersegmenten umfassen, um den Ausleger zwischen einer Betriebsposition, in welcher er sich etwa quer zu Fahrtrichtung der Verteilmaschine erstreckt und die ausgeklappten Auslegersegmente im Wesentlichen linear hintereinander angeordnet sind, und einer Ruhe-, Transport- oder Reinigungsposition, in welcher die Auslegersegmente im Wesentlichen aneinander angeklappt sind, hin und her zu verschwenken, so dass die landwirtschaftliche Verteilmaschine z.B. über öffentliche Straßen zu ihrem Einsatzort auf dem Feld verbracht werden kann.

Handelt es sich bei einer solchen landwirtschaftlichen Verteilmaschine beispielsweise um eine pneumatische Verteilmaschine, so dient zur Förderung des in dem Vorratsbehälter auf Vorrat gehaltenen, in der Regel pulver- oder partikelförmigen Verteilgutes, wie Dünger, Saatgut und dergleichen, ein Gebläse, dessen Druckleitung sich z.B. an einen Auslass eines oder mehrerer, dem Vorratsbehälter nachgeordneter Dosierorgane, welche beispielsweise eine gesteuert und/oder geregelt drehangetriebene Dosierwalze umfassen, anschließt und in einem Druckverteiler mündet, an welchen sich eine Mehrzahl an Förderleitungen anschließt. Zwischen dem Druckverteiler und den Förderleitungen angeordnete Übergabekammern, welche zweckmäßigerweise mit jeweils eine Düse und einen Diffusor umfassenden Injektoren ausgestattet sein können, dienen zur Übergabe des Verteilgutes von dem Dosierorgan an die Förderleitungen, um sicherzustellen, dass jeder Förderleitung die gewünschte Menge an Verteilgut aufgegeben wird. Das Verteilgut wird schließlich pneumatisch über die nach außen umgelenkten und sich entlang eines jeweiligen Auslegers erstreckenden Förderleitungsabschnitte bis zu deren Ende gefördert, wo das Verteilgut an entsprechende Verteilorgane überführt wird, welche jeweils mit Abstand voneinander an den Auslegern angeordnet sind. Die Verteilorgane können im Falle eines pneumatischen Düngerstreuers z.B. nach Art von Prallorganen, wie Prallplatten, Pralltellern oder dergleichen, ausgestaltet sein, auf welche das in einer jeweiligen Förderleitung pneumatisch transportierte Verteilgut auftrifft und von dort im Wesentlichen fächerförmig auf dem Boden abgelegt wird. Im Falle von pneumatischen Sämaschinen oder Drillmaschinen können die Verteilorgane z.B. von Säscharen oder dergleichen gebildet sein, welche gleichfalls über den jeweiligen Förderleitungsabschnitt mit pneumatisch transportiertem Verteilgut versorgt werden. Eine derartige pneumatische Verteilmaschine in Form eines pneumatischen Düngerstreuers ist beispielsweise aus der DE 10 2004 030 240 A1 bekannt.

Handelt es sich bei einer gattungsgemäßen landwirtschaftlichen Verteilmaschine beispielsweise um eine sogenannte Feldspritze, so dienen zur Dosierung und Förderung des in dem - in diesem Fall üblicherweise von einem Tank gebildeten - Vorratsbehälter auf Vorrat gehaltenen, in der Regel flüssigen Verteilgutes, wie Pflanzenschutzmitteln, Pestiziden, Herbiziden und dergleichen, eine oder insbesondere mehrere Pumpen, deren Förderleitungen wiederum nach außen umgelenkt sind und sich entlang eines jeweiligen Auslegers erstreckende Förderleitungsabschnitte umfassen, welche an einem jeweiligen Verteilorgan enden, welche gleichfalls jeweils mit Abstand voneinander an den Auslegern angeordnet sind. Die Verteilorgane können in diesem Fall z.B. nach Art von Düsen ausgestaltet sein, welche das flüssige Verteilgut in der jeweils vorgesehenen Verteilungsbreite versprühen.

Als in konstruktiver Hinsicht relativ aufwändig gestaltet sich häufig der Aufbau der Ausleger, welche mit zunehmender Arbeitsbreite und hiermit verbundener zunehmender Gesamtlänge erhebliche Lasten sowie insbesondere Drehmomente aufnehmen und eine hierfür hinreichende Festigkeit und Steifigkeit aufweisen müssen, aber gleichwohl nicht übermäßig massiv ausgestaltet sein sollten, um das Gesamtgewicht der landwirtschaftlichen Verteilmaschine in vertretbaren Grenzen zu halten, wobei sie zugleich einfach und schnell montierbar sein sollten.

Die DE 10 2019 007 650 A1 beschreibt eine gattungsgemäße landwirtschaftliche Verteilmaschine, deren Ausleger einer Mehrzahl an schwenkbar aneinander angelenkten Auslegersegmenten umfassen. Letztere umfassen jeweils zwei sich vornehmlich in Längsrichtung des Auslegersegmentes erstreckende und mit Abstand voneinander angeordnete Tragprofilteile, welche jeweils aus einer Blechplatte ausgeschnitten sind und eine Mehrzahl an aus der Blechplatte ausgeschnittenen Durchgangsöffnungen umfassen, wobei die Durchgangsöffnungen zwischen durchgehenden Längsrändern eines jeweiligen Tragprofilteils, welche die Längsstreben der Ausleger bilden, und einer Mehrzahl an die durchgehenden Längsränder miteinander verbindenden Versteifungsabschnitten, welche die Querstreben der Ausleger bilden, ausgebildet sind. Im Bereich ihrer die Längsstreben der Ausleger bildenden Längsränder sind die Tragprofilteile jeweils mittels einer Mehrzahl an Querverbindungsteile miteinander verbunden, welche zusätzliche Querstreben der Ausleger bilden. Der solchermaßen aufgebaute Ausleger besitzt bei einem relativ geringen Gewicht eine hohe Festigkeit und Steifigkeit, doch gestaltet sich seine Herstellung aufgrund einer Vielzahl an Schnitten und Umformungsschritten der Blechplatte sowie einer Vielzahl an Schweißverbindungen zur Befestigung der Querverbindungsteile verhältnismäßig aufwändig und teuer.

Entsprechendes gilt für die Ausleger einer landwirtschaftlichen Verteilmaschine gemäß der US 8 746 589 B2, welche zwei obere Längsstreben und zwei untere Längsstreben umfassen. An den einander zugewandten Seiten (rechts/links) der beiden oberen bzw. der beiden unteren Längsstreben sind einerseits Befestigungsleisten angeformt, welche zur paarweisen Verbindung der oberen bzw. unteren Längsstreben mittels Kopplungsblechen dienen, welche mit den Befestigungsleisten verschraubt sind. Andererseits sind an den einander zugewandten Seiten (unten/oben) jeweils einer unteren und einer oberen Längsstrebe Befestigungsvorsprünge angeformt, an welchen Befestigungsmittel montiert sind, um hieran Verbindungsstreben zwischen den jeweiligen (oberen und unteren) Längsstreben festzulegen. Die Befestigungsmittel sind zweiteilig ausgebildet, wobei die beiden Hälften der Befestigungsmittel mittels Nieten oder Klebern miteinander verbunden sind, um sie an den Befestigungsvorsprüngen der Längsstreben zu montieren. Die Längsstreben weisen somit einen relativ komplexen und aufwändig herstellbaren Querschnitt auf, wobei die Montage des Auslegers eine Vielzahl an separaten Teilen erfordert, um einerseits die Längsstreben untereinander mittels der hiermit verschraubten Kopplungsbleche zu verbinden, andererseits die Verbindungsstreben an den Längsstreben zu befestigen.

Darüber hinaus sind Ausleger von gattungsgemäßen Verteilmaschinen bekannt, welche nur zwei, z.B. eine obere und eine untere Längsstrebe umfassen, die jedoch hohen Biegemomenten ausgesetzt sind und somit eine stabile verwindungssteife und häufig eine sehr komplexe Querschnittsform besitzen müssen. So beschreibt z.B. die WO 2015/185390 A1 eine Feldspritze mit zwei schwenkbaren Auslegern, welche eine obere und eine untere Längsstrebe umfassen, die jeweils mittels Extrudieren hergestellt sind. Die beiden Längsstreben sind mittels mehrerer Verbindungsstreben miteinander verbunden, die an einem jeweiligen Montageprofil der Längsstreben mittels Klemmelementen befestigt sind.

Um für ein geringes Gewicht der Ausleger zu sorgen, gewinnen in jüngerer Zeit auch Faserverbundwerkstoffe auf Kunststoffbasis zumindest für Teile der Ausleger zunehmend an Bedeutung, welche jedoch gegenüber herkömmlichen Metallwerkstoffen in der Regel eine deutlich geringere Steifigkeit bzw. eine höhere Elastizität besitzen und zudem jedenfalls dann, wenn es sich um üblicherweise verwendete faserverstärkte duroplastische Kunststoffe handelt, nicht schweißbar sind. Darüber hinaus erweist sich auch das Anbringen von Bohrungen in faserverstärkte Kunststoffmaterialien als problematisch, da sie bei der Einleitung von hohen Kräften, wie es bei landwirtschaftlichen Verteilmaschinen der Fall ist, infolge Kerbwirkung zu versagen drohen.

Die FR 3 064 156 A1 beschreibt eine landwirtschaftliche Verteilmaschine in Form einer Feldspritze, deren Ausleger drei sich in Erstreckungsrichtung des Auslegers erstreckende Längsstreben aufweisen, von welchen die beiden unteren Längsstreben mit der oberen Längsstrebe jeweils mittels einer Mehrzahl an Verbindungsstreben verbunden sind. Letztere sind mittels Kopplungselementen jeweils einerseits an einer der beiden benachbarten unteren Längsstreben, andererseits an der oberen Längsstrebe festgelegt, wobei die Kopplungselemente die beiden benachbarten unteren Längsstreben paarweise miteinander verbinden und hieran verklebt sein können. Die Kopplungselemente, welche Ringflansche für die Längsstreben umfassen, welche mittels einer Querverbindung miteinander verbunden sind, erweisen sich sowohl in konstruktiver als auch insbesondere in montagetechnischer Hinsicht als recht aufwändig und kompliziert.

Der Erfindung liegt die Aufgabe zugrunde, den oder die Ausleger einer landwirtschaftlichen Verteilmaschine der eingangs genannten Art dahingehend weiterzubilden, dass er unter zumindest weitestgehender Vermeidung der vorgenannten Nachteile eine insbesondere auch für große Arbeitsbreiten geeignete hohe Festigkeit und Steifigkeit bei einem gleichwohl verhältnismäßig geringen Gewicht aufweist, einfach und kostengünstig herstellbar und montierbar ist sowie für praktisch beliebige Werkstoffe der tragenden Längsstreben des Auslegers geeignet ist.

Erfindungsgemäß wird diese Aufgabe bei einer landwirtschaftlichen Verteilmaschine der eingangs genannten Art dadurch gelöst, dass die Kopplungselemente ein erstes Profilteil aufweisen, welches sich zwischen den beiden benachbarten Längsstreben des Auslegers erstreckt, und dass die Kopplungselemente wenigstens ein an dem ersten Profilteil befestigtes zweites Profilteil aufweisen, wobei zwischen dem ersten Profilteil und dem wenigstens einen zweiten Profilteil jeweils eine Aufnahme für eine jeweilige der beiden benachbarten Längsstreben gebildet ist, in welcher eine jeweilige Längsstrebe kraftschlüssig und/oder stoffschlüssig mittels Klebern festgelegt ist.

Die erfindungsgemäße Ausgestaltung macht einerseits aufgrund der lediglich kraft- bzw. klemmschlüssigen Verbindung und/oder der stoffschlüssigen Verbindung unter Einsatz von Klebern der Kopplungselemente mit den Längsstreben etwaige Bohrungen in den Längsstreben des Auslegers entbehrlich, so dass letztere einfach und kostengünstig hergestellt und insbesondere aus beliebigen Materialien einschließlich sehr leichter Werkstoffe, wie Leichtmetallen oder insbesondere faserverstärkten Kunststoffmaterialien, gefertigt sein können, ohne ihre Festigkeit auch bei hoher Dauerbeanspruchung, wie sie bei landwirtschaftlichen Verteilmaschinen während des Betriebs üblicherweise auftreten, zu beinträchtigen. Darüber hinaus sind die Kopplungselemente auf diese Weise an beliebigen Abschnitten in Längsrichtung der Längsstreben einfach montierbar, so dass mit serienmäßig vorgefertigten Komponenten der Aufbau des Auslegers je nach erforderlicher Traglast in weiten Grenzen variiert werden kann, wobei mit zunehmenden Lasten mehr Kopplungselemente vorgesehen sein können, um eine zunehmende Anzahl an Verbindungsstreben zwischen den Längsstreben vorsehen zu können. Die Verbindung zweier benachbarter Längsstreben mittels der Kopplungselemente sorgt dabei gleichfalls für eine sehr hohe Steifigkeit des Auslegers bei praktisch beliebigen Materialien der Streben, so dass die Kopplungselemente sowohl zur gegenseitigen Versteifung der beiden benachbarten Längsstreben als auch zur Befestigung der Verbindungsstreben zu dienen vermögen, welche zur Aussteifung der beiden Längsstreben mit zumindest einer weiteren Längsstrebe des Auslegers dienen.

In konstruktiver Hinsicht sieht die Erfindung vor, dass die Kopplungselemente einerseits ein erstes Profilteil aufweisen, welches sich zwischen den beiden benachbarten Längsstreben des Auslegers erstreckt, wobei die Profilteile andererseits wenigstens ein zweites, insbesondere lösbar, an dem ersten Profilteil befestigtes zweites Profilteil aufweisen, wobei zwischen dem ersten Profilteil und dem wenigstens einen zweiten Profilteil jeweils eine Aufnahme für eine jeweilige der beiden benachbarten Längsstreben gebildet ist, in welcher eine jeweilige Längsstrebe kraftschlüssig und/oder stoffschlüssig mittels Klebern festgelegt ist. Wie bereits erwähnt, können die Längsstreben dabei ausschließlich kraft- bzw. reibschlüssig in den derart gebildeten Aufnahmen festgelegt sein, wobei der die Aufnahme durchgreifende Abschnitt einer jeweiligen Längsstrebe vorteilhafterweise mit einer reibungserhöhenden Umhüllung, wie beispielsweise aus elastomeren Werkstoffen, z.B. Gummi, Silikon oder dergleichen, versehen sein kann. Alternativ oder zusätzlich können die Längsstreben auch stoffschlüssig in den derart gebildeten Aufnahmen festgelegt sein, indem sie mittels geeigneter Kleber verklebt sind.

Während der Ausleger grundsätzlich wenigstens drei Längsstreben umfassen kann, von welchen zwei mittels der hieran kraftschlüssig und/oder stoffschlüssig mittels Klebern festgelegten Kopplungselemente miteinander verbunden sind und von welchen die dritte Längsstrebe mittels der Verbindungsstreben mit den Kopplungselementen verbunden ist, kann in vorteilhafter Ausgestaltung vorgesehen sein, dass der Ausleger wenigstens vier, insbesondere genau vier, Längsstreben umfasst, wobei die Kopplungselemente jeweils zwei benachbarte Längsstreben jeweils paarweise miteinander verbinden und an den jeweils benachbarten Längsstreben kraftschlüssig und/oder stoffschlüssig mittels Klebern festgelegt sind, und wobei die Verbindungsstreben an den ersten Befestigungsmitteln jeweils eines Kopplungselementes eines jeweiligen Paares der Längsstreben befestigt sind. Auf diese Weise ergibt sich ein in besonderem Maße versteifter Ausleger mit hoher Traglast, bei welchem jeweils zwei Paare an Längsstreben mittels einer Mehrzahl an hieran kraftschlüssig und/oder stoffschlüssig mittels Klebern festgelegten Kopplungselementen miteinander verbunden sind, wobei die beiden Paare von Längsstreben mittels der Verbindungsstreben miteinander verbunden sind, welche sich jeweils zwischen den Kopplungselementen sowohl des einen als auch des anderen Paares von Längsstreben erstrecken. Die Verbindungsstreben können sich hierbei beispielsweise nach Art eines Stabwerks etwa diagonal bzw. im Wesentlichen V-förmig zwischen den Paaren von mittels der Kopplungselemente miteinander verbundenen Längsstreben erstrecken, um infolge einer Aufnahme sowohl von Druck- als auch von Zugkräften für eine hohe Steifigkeit des Auslegers zu sorgen.

In konstruktiver Hinsicht kann vorzugsweise vorgesehen sein, dass das erste Profilteil des Kopplungselementes im Wesentlichen in Form eines U-Profils ausgebildet ist, dessen U-Steg sich zwischen den beiden benachbarten Längsstreben des Auslegers erstreckt und dessen U-Schenkel die einander abgewandten Seiten der beiden benachbarten Längsstreben umgreifen, wobei das wenigstens eine zweite Profilteil des Kopplungselementes
- zwei im Wesentlichen in Form von Z-Profilen ausgebildete zweite Profilteile umfasst, deren einer endständiger Z-Steg jeweils zumindest an dem U-Steg des U-Profils des ersten Profilteils, insbesondere lösbar, befestigt ist und deren beiden anderen Z-Stege gemeinsam mit dem U-Profil des ersten Profilteils die jeweilige Aufnahme für eine jeweilige der beiden benachbarten Längsstreben bilden (das zweite Profilteil ist in diesem Falle also zweiteilig ausgestaltet); oder
- gleichfalls im Wesentlichen in Form eines U-Profils mit an den freien Enden der U-Schenkel angeordneten, sich von dem U-Steg fort erstreckenden Endstegen ausgebildet ist, dessen U-Steg zumindest an dem U-Steg des U-Profils des ersten Profilteils, insbesondere lösbar, befestigt ist und dessen U-Schenkel mit deren Endstegen gemeinsam mit dem U-Profil des ersten Profilteils die jeweilige Aufnahme für eine jeweilige der beiden benachbarten Längsstreben bilden (das zweite Profilteil ist in diesem Falle also einteilig ausgestaltet, wobei es im Wesentlichen aus zwei der obigen Z-Profilen gebildet ist, deren an dem U-Profil des ersten Profilteils befestigen endständigen Z-Stege miteinander verbunden sind).

Im Hinblick auf eine sehr einfache und bequeme Montage der Kopplungselemente unter Kraft- bzw. Reibschluss und/oder unter Stoffschluss mittels Klebern mit den beiden benachbarten Längsstreben hat sich die erstgenannte Ausführungsvariante eines zweiteiligen zweiten Profilteils in vielen Fällen als besonders geeignet erwiesen.

Um insbesondere im Falle einer (auch) kraft- bzw. reibschlüssigen Verbindung des Kopplungselementes mit den beiden benachbarten Längsstreben des Auslegers für eine sehr hohe Klemmkraft zu sorgen, kann es sich als zweckdienlich erweisen, wenn das erste Profilteil des Kopplungselementes ferner im Bereich seiner die Aufnahme für eine jeweilige der beiden benachbarten Längsstreben bildenden U-Schenkel, insbesondere lösbar,
- an einem jeweiligen endständige Z-Steg eines jeweiligen Z-Profils des zweiten Profilteils (im Falle einer zweiteiligen Ausgestaltung des zweiten Profilteils); oder
- an einem jeweiligen Endsteg des U-Profils des zweiten Profilteils (im Falle einer einteiligen Ausgestaltung des zweiten Profilteils),
befestigt ist.

Zur, insbesondere lösbaren, Verbindung der Profilteile des Kopplungselementes aneinander unter Bildung der Aufnahmen für die beiden benachbarten Längsstreben des Auslegers kann das erste Profilteil des Kopplungselementes vorzugsweise zu dem wenigstens einen zweiten Profilteil des Kopplungselementes komplementäre Bohrungen aufweisen, um das erste Profilteil mittels Schrauben oder Bolzen lösbar an dem wenigstens einen zweiten Profilteil zu befestigen und durch Anziehen der Schrauben oder Bolzen für die notwendige Klemmkraft der Längsstreben in den Aufnahmen zu sorgen.

Die zur Befestigung der Verbindungsstreben an dem Kopplungselement dienenden ersten Befestigungsmittel der Kopplungselemente können vorzugsweise ihrerseits von Bohrungen gebildet sein, wobei eine jeweilige Verbindungsstrebe im Bereich zumindest eines ihrer Endabschnitte, insbesondere an beiden ihrer Endabschnitte, hierzu komplementäre Bohrungen aufweist, um die Verbindungsstreben mittels Schrauben oder Bolzen, insbesondere unter einem je nach gewünschter Anordnung der Verbindungsstreben in Bezug auf die mittels der Kopplungselemente paarweise miteinander verbundenen Längsstreben veränderbaren Winkel, an den Kopplungselementen zu befestigen.

In diesem Zusammenhang erweist es sich von Vorteil, wenn sowohl das erste Profilteil als auch das wenigstens eine zweite Profilteil des Kopplungselementes erste Befestigungsmittel in Form von komplementären Bohrungen aufweisen, um die Verbindungsstreben mittels Schrauben oder Bolzen, insbesondere unter einem veränderbaren Winkel, sowohl an dem ersten Profilteil als auch an dem wenigstens einen zweiten Profilteil des Kopplungselementes zu befestigen. Auf diese Weise vermögen von den Verbindungsstreben in die Kopplungselemente eingeleitete Zug- und Druckkräfte sowohl von den ersten als auch von den zweiten Profilteilen der Kopplungselemente aufgenommen zu werden, so dass es zu keiner Verformung der ersten in Bezug auf die zweiten Profilteile kommt, welche den Kraft- bzw. Reibschluss und/oder den Stoffschluss zwischen den Kopplungselementen und den beiden hieran befestigten Längsstreben beeinträchtigen könnte.

Zumindest einige oder auch alle Verbindungsstreben weisen in diesem Fall zweckmäßigerweise endständige Befestigungsabschnitte auf, welche zu ihrer, insbesondere lösbaren, Befestigung an den ersten Befestigungsmitteln der Kopplungselemente dienen, wobei die Befestigungsabschnitte der Verbindungsstreben insbesondere Bohrungen aufweisen. Die Befestigungsabschnitte der Verbindungsstreben können dabei einstückig mit den Verbindungsstreben gebildet sein, sofern letztere z.B. aus Metall oder vorzugsweise Leichtmetall, wie beispielswiese Aluminium einschließlich dessen Legierungen, gefertigt sind, oder sie können insbesondere auch als separate Metallteile ausgestaltet sein, welche mit den im Übrigen z.B. aus faserverstärkten Kunststoffmaterialien gefertigten Verbindungsstreben verbunden sind. Derartige Verbundbauteile lassen sich in aus dem Stand der Technik als solcher bekannten Weise beispielsweise dadurch herstellen, indem solche separaten Metallteile mit einem faserverstärkten Harz umgossen oder umspritzt werden und das Harz zu der faserverstärkten Polymermatrix der Verbindungsstrebe ausgehärtet oder erstarrt wird, oder es werden insbesondere mit entsprechenden Harzen imprägnierte Endlosfasern mit den separaten Metallteilen verbunden und die Imprägnierharze zu der faserverstärkten Polymermatrix der Verbindungsstrebe ausgehärtet oder erstarrt.

Um eine größtmögliche Steifigkeit der Kopplungselemente zu gewährleisten, können letztere ferner Versteifungsrippen aufweisen, welche sich insbesondere im Wesentlichen senkrecht zu den beiden hieran festgelegten Längsstreben des Auslegers erstrecken und beispielsweise zumindest an einem sich zwischen den beiden benachbarten Längsstreben erstreckenden Abschnitt des Kopplungselementes, z.B. an dem U-Steg des ersten Profilteils desselben, angeordnet sind.

Um für eine vor mechanischen Einwirkungen geschützte Anordnung der von den Auslegern getragenen endständigen Förderleitungsabschnitte der Förderleitungen der Verteilmaschine zu sorgen, können zumindest einige Förderleitungsabschnitte bevorzugt zumindest abschnittsweise im Innern des von den Längsstreben des Auslegers gebildeten Querschnittes geführt sein.

In diesem Zusammenhang kann gemäß einer vorteilhaften Weiterbildung vorgesehen sein, dass zumindest einige Kopplungselemente ferner zweite Befestigungsmittel aufweisen, welche zur, insbesondere lösbaren, Befestigung von Führungsteilen für die von dem Ausleger getragenen endständigen Förderleitungsabschnitte der Förderleitungen an dem Kopplungselement dienen. Die Kopplungselemente vermögen in diesem Fall also zugleich zur Befestigung der Führungsteile der Förderleitungsabschnitte zu dienen, welche ihrerseits keiner zusätzlichen Befestigung unmittelbar an den Längs- oder Verbindungsstreben des Auslegers bedürfen. Die Führungsteile können dabei beispielsweise im Wesentlichen plattenförmig mit einer Mehrzahl an Führungsöffnungen ausgebildet sein, welche zur Aufnahme eines jeweiligen Förderleitungsabschnittes dienen, wobei die zweiten Befestigungsmittel der Kopplungselemente insbesondere
- Bohrungen zur Befestigung der Führungsteile mittels Schrauben oder Bolzen; und/oder
- in Bezug auf den Querschnitt der plattenförmigen Führungsteile komplementäre Schlitze zur formschlüssigen Aufnahme der plattenförmigen Führungsteile
aufweisen können.

Während die Längsstreben des erfindungsgemäßen Auslegers grundsätzlich eine beliebige Querschnittsform einschließlich rund, oval oder dergleichen besitzen können, können die Längsstreben des wenigstens einen Auslegers vorzugsweise einen mehreckigen, insbesondere viereckigen, Querschnitt aufweisen, was die konstruktive Ausgestaltung der Kopplungselemente, wie insbesondere deren ersten und zweiten Profilteile, zwischen welchen die von den beiden benachbarten Längsstreben durchgriffenen Aufnahmen gebildet sind, vereinfacht. Die Verbindungsstreben können eine beliebige Querschnittsform, wie rund, oval, drei-, vier- oder mehreckig etc. besitzen. Im Hinblick auf die angestrebte Leichtbauweise können ferner zumindest die Längsstreben, insbesondere sowohl die Längsstreben als auch die Verbindungsstreben, des wenigstens einen Auslegers von Hohlprofilen gebildet sein.

Wie bereits angedeutet, macht es die Erfindung im Hinblick auf eine Leichtbauweise auch vorzugsweise möglich, dass
- zumindest die Längsstreben, insbesondere sowohl die Längsstreben als auch die Verbindungsstreben, des wenigstens einen Auslegers vornehmlich aus einem faserverstärkten Kunststoffmaterial gefertigt sind; und/oder
- die Kopplungselemente aus Metall, insbesondere aus Leichtmetall, wie z.B. Aluminium einschließlich dessen Legierungen, aber z.B. auch aus anderen Metallwerkstoffen, wie z.B. Stahl,
gefertigt sind.

Darüber hinaus kann es insbesondere im Falle von Verteilmaschinen mit relativ großer Arbeitsbreite zweckmäßig sein, wenn der wenigstens eine Ausleger eine Mehrzahl an schwenkbar aneinander angelenkten Auslegersegmenten umfasst, um den Ausleger zwischen einer Betriebsposition, in welcher er sich etwa quer zu Fahrtrichtung der Verteilmaschine erstreckt und die ausgeklappten Auslegersegmente im Wesentlichen linear hintereinander angeordnet sind, und einer Ruhe-, Transport- oder Reinigungsposition, in welcher die Auslegersegmente im Wesentlichen aneinander angeklappt sind, hin und her zu verschwenken, so dass die landwirtschaftliche Verteilmaschine z.B. mit hoher Kompaktheit über öffentliche Straßen zu ihrem Einsatzort auf dem Feld verbracht werden kann.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Ansicht einer Ausführungsform einer erfindungsgemäßen landwirtschaftlichen Verteilmaschine zum Ausbringen von pulver- oder partikelförmigem Verteilgut in Form einer pneumatischen Verteilmaschine, wie eines Pneumatik-Düngerstreuers, ohne dessen Ausleger;
- Fig. 2: eine schematische perspektivische Ansicht der Tragkonstruktion der pneumatischen Verteilmaschine gemäß Fig. 1;
- Fig. 3: eine schematische perspektivische Ansicht der Luftführung der pneumatischen Verteilmaschine gemäß Fig. 1 und 2;
- Fig. 4: einen schematischen Längsschnitt der pneumatischen Verteilmaschine gemäß Fig. 1 bis 3;
- Fig. 5: eine schematische perspektivische Detailansicht der pneumatischen Verteilmaschine gemäß Fig. 1 bis 4 im Bereich eines ihrer Dosierorgane;
- Fig. 6: eine schematische perspektivische Schnittansicht der Dosierwalze des Dosierorgans gemäß Fig. 5;
- Fig. 7: einen schematischen Längsschnitt durch die Dosierwalze des Dosierorgans gemäß Fig. 6;
- Fig. 8: eine schematische Querschnittansicht der Dosierwalze entlang der Schnittebene VIII-VIII gemäß Fig. 7;
- Fig. 9: eine schematische perspektivische Detailansicht eines in Form eines Pralltellers bzw. einer Prallplatte ausgestalteten Verteilorgans der pneumatischen Verteilmaschine gemäß Fig. 1 bis bis 5, welches von ihrem Ausleger getragen ist und sich an das freie Ende eines gleichfalls von dem Ausleger getragenen Förderleitungsabschnittes anschließt;
- Fig. 10: eine schematische perspektivische Gesamtansicht einer Ausführungsform eines der Ausleger der pneumatischen Verteilmaschine gemäß Fig. 1 bis 5, welcher eine Mehrzahl an - hier vier - schwenkbar aneinander angelenkten Auslegersegmenten umfasst;
- Fig. 11: eine schematische perspektivische Detailansicht einer Ausführungsform eines Abschnittes der Auslegersegmente des Auslegers gemäß Fig. 10 mit vier Längsstreben mit einer Mehrzahl an hieran kraftschlüssig und/oder stoffschlüssig mittels Klebern festgelegten Kopplungselementen, welche jeweils zwei benachbarte Längsstreben paarweise miteinander verbinden und an welchen eine Mehrzahl an Verbindungsstreben befestigt sind;
- Fig. 12: eine schematische perspektivische Detailansicht des Auslegersegmentes gemäß Fig. 10 und 11 im Bereich eines der die beiden unteren Längsstreben paarweise verbindenden Kopplungselemente;
- Fig. 13: eine im Wesentlichen der Fig. 12 entsprechende schematische perspektivische Detailansicht des Auslegersegmentes gemäß Fig. 10 und 11 im Bereich eines der die beiden oberen Längsstreben paarweise verbindenden Kopplungselemente;
- Fig. 14: eine im Wesentlichen der Fig. 12 entsprechende schematische perspektivische Detailansicht des Auslegersegmentes im Bereich eines Kopplungselementes, an welchem ein Führungsteil für die von dem Ausleger getragenen endständigen Förderleitungsabschnitte befestigt worden ist, wobei die Verbindungsstreben aus Veranschaulichungsgründen weggelassen sind;
- Fig. 15: eine schematische Querschnittsansicht eines an zwei benachbarten Längsstreben des Auslegersegmentes kraftschlüssig und/oder stoffschlüssig mittels Klebern festgelegten Kopplungselementes einschließlich der hieran befestigten Verbindungsstreben etwa entsprechend der Schnittebene XV-XV der Fig. 13;
- Fig. 16: eine schematische perspektivische Ansicht eines der Kopplungselemente ohne hieran montierten Längs- oder Verbindungsstreben von schräg oben betrachtet; und
- Fig. 17: eine der Fig. 16 entsprechende schematische perspektivische Ansicht des Kopplungselementes ohne hieran montierten Längs- oder Verbindungsstreben von schräg unten betrachtet.

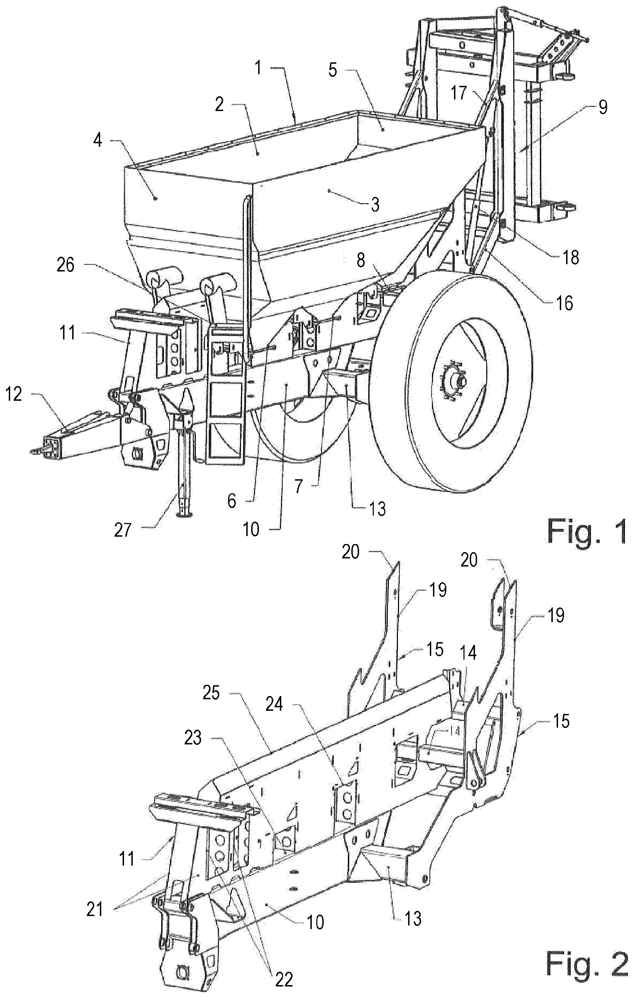

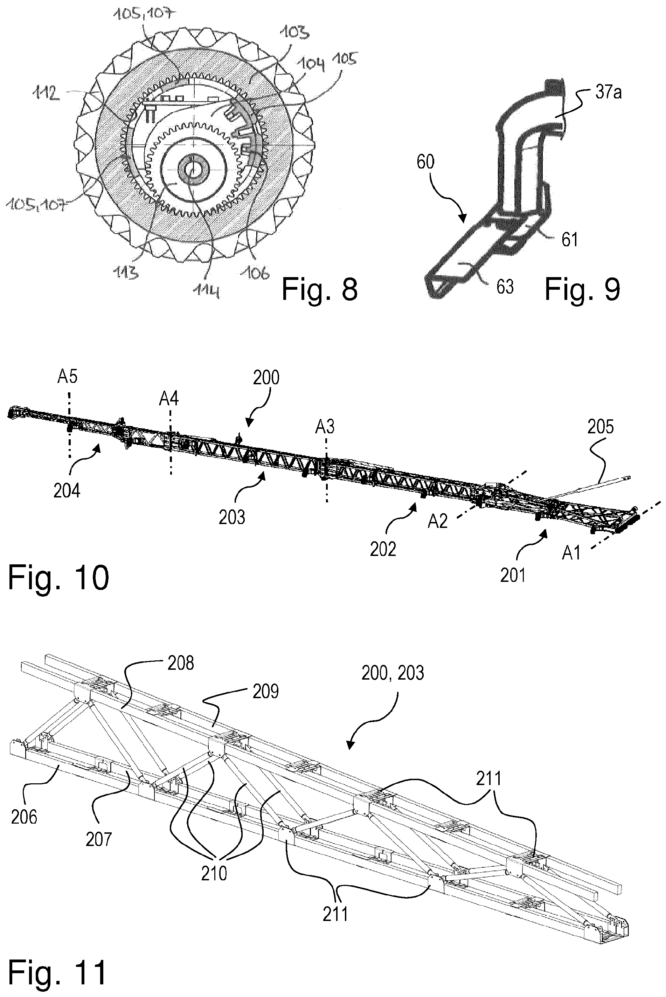

In der Fig. 1 ist ein Ausführungsbeispiel einer landwirtschaftlichen Verteilmaschine - hier in der Ausgestaltung einer pneumatischen Verteilmaschine - in Form eines von einer Zugmaschine, wie einem Traktor, gezogenen einachsigen Nachläufers exemplarisch wiedergegeben, welche als Pneumatik-Düngerstreuer zum Ausbringen von pulver- oder partikelförmigem Verteilgut, wie Dünger und/oder Saatgut, zu dienen vermag. In Bezug auf die in der Fig. 1 aus Veranschaulichungsgründen nicht dargestellten, sich in der Betriebsposition etwa quer zur Fahrtrichtung erstreckenden Ausleger mit den zu den einzelnen Verteilorganen führenden Förderleitungsabschnitte sei auf die detaillierten Ausführungen weiter unten unter Bezugnahme auf die Fig. 10 ff verwiesen.

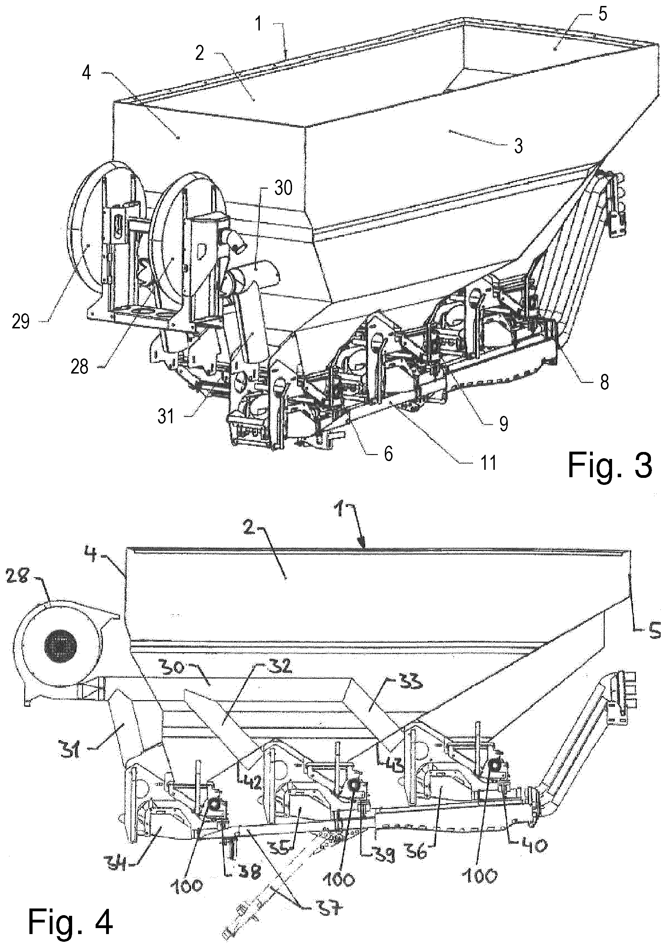

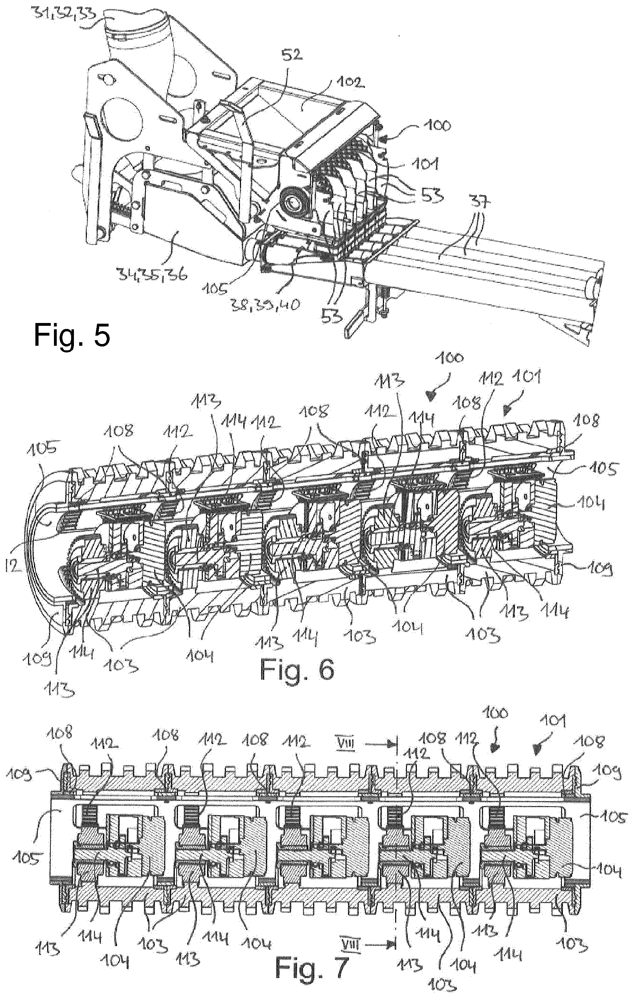

Die Verteilmaschine weist einen Vorratsbehälter 1 zur Aufnahme des Verteilgutes auf, dessen seitlichen 2, 3, vorderen 4 und rückwärtigen Wände 5 sich im unteren Bereich nach innen zu einer Bodenmulde verjüngen, welche beidseits der Längsachse des Vorratsbehälters 1 Austrittsöffnungen 6, 7, 8 aufweist, welchen jeweils ein Dosierorgan (vgl. die Bezugszeichen 100 der Fig. 4) nachgeordnet ist, von welchem eine mögliche Ausführungsvariante weiter unten unter Bezugnahme auf die Fig. 6 bis 8 näher erläutert ist. Im vorliegenden Fall sind z.B. jeweils drei, also insgesamt sechs Austrittsöffnungen 6, 7, 8 an jeder Seite des Vorratsbehälters 1 vorgesehen, welche mit jeweils einem Dosierorgan 100 versehen sind. Die in der Fig. 1 nicht im Einzelnen erkennbaren Dosierorgane 100 sind beispielsweise in unterschiedlicher Höhe angeordnet und versorgen jeweils eine Mehrzahl an Förderleitungen (aus Veranschaulichungsgründen in der Fig. 1 ebenfalls nicht gezeigt) mit dem dosierten Verteilgut, wobei die Förderleitungen jeweils zu Paketen zusammengefasst sind und zunächst nach hinten zu einem Hubrahmen 9 geführt und sodann nach außen umgelenkt sind. Der Hubrahmen 9 nimmt die in der Fig. 1 nicht gezeigten Ausleger (vgl. die Fig. 10 ff) auf, welche sich in ihrer Betriebsposition zu beiden Seiten im Wesentlichen senkrecht zur Fahrtrichtung erstrecken, während sie in ihrer Ruhe-, Transport- oder Reinigungsposition gegen die Längsseiten der Verteilmaschine oder auch gegen deren Heckseite anklappbar sind (siehe hierzu ebenfalls weiter unten unter Bezugnahme auf die Fig. 10). Jeder Ausleger 200 (vgl. die Fig. 10) ist dabei zweckmäßigerweise schwenkbar an dem Hubrahmen 9 angelenkt und umfasst eine Mehrzahl an schwenkbar aneinander angelenkten Auslegersegmenten 201, 202, 203, 204, so dass einzelne Auslegersegmente 201, 202, 203, 204 gemeinsam mit den hiervon getragenen Förderleitungsabschnitten aus der nach außen verschwenkten, sich im Wesentlichen quer zur Fahrtrichtung der Verteilmaschine erstreckenden Betriebsposition in ihre zusammengeklappte Ruheposition angeklappt werden können und umgekehrt. Die von den Auslegern 200 aufgenommenen Förderleitungsabschnitte enden in unterschiedlichen Abständen von der Längsachse der Verteilmaschine an Verteilorganen 60, von welchen ein Ausführungsbeispiel weiter unten unter Bezugnahme auf die Fig. 9 näher beschrieben ist, um den aus den jeweiligen Förderleitungsabschnitten austretenden Verteilgutstrom in jeweils nebeneinander angeordnete Flächenbereiche auf dem Boden zu verteilen.

Wie weiterhin der Fig. 1 und insbesondere der Fig. 2 zu entnehmen ist, ist der Vorratsbehälter 1 von einem Tragrahmen aufgenommen, welcher im vorliegenden Fall eine zentrale Strebe 10, z.B. in Form eines Rechteckrohres, aufweist, an dessen Oberseite ein Aufbau 11 festgelegt ist, welcher beispielsweise eine tunnelförmige Gestalt besitzt. Am vorderen Ende der Strebe 10 ist eine Deichsel 12, z.B. federnd, angebracht, während am hinteren Ende ein Achsrahmen 13 festgelegt ist. Am hinteren Ende des Aufbaus 11 ist eine Tragkonstruktion angeordnet, welche aus Quertraversen 14 sowie diese an ihren Enden verbindenden Seitenwangen 15 gebildet ist. An den beiden Seitenwangen 15 sind Lenker 16, 17 gelagert, welche mit ihrem anderen Ende an dem Hubrahmen 9 angelenkt sind und mittels Hubstützen 18, z.B. in Form von Hydraulikzylindern, den Hubrahmen 9 anheben und absenken können. Die sich nach oben ersteckenden Abschnitte 19 der Seitenwangen 15 stützen mittels ihrer abgeschrägten Enden 20 die geneigte Rückwand 5 des Vorratsbehälters 1 ab. Der beim gezeigten Ausführungsbeispiel tunnelförmige Aufbau 11 weist an seinen Seitenwänden 21 z.B. Montageöffnungen 22, 23 und Halterungen 24 zur Anordnung von Funktionsteilen auf, wobei die Halterungen 24 die weiter unten unter Bezugnahme auf die Fig. 6 bis 8 näher beschriebenen Dosierorgane einschließlich deren Antriebe aufnehmen. Innerhalb des tunnelförmigen Aufbaus 11 können Versorgungsleitungen, wie Hydraulikleitungen und/oder elektrische Leitungen, verlegt sein. An seiner Oberseite ist der Aufbau 11 nach Art eines nach oben spitz zulaufenden Giebels 25 ausgebildet, welcher gemeinsam mit seinen Seitenwänden 21 eine Trennwand in dem Vorratsbehälter 1 bildet. Der Giebel 25 leitet das in dem Vorratsbehälter 1 befindliche Verteilgut zu den rechts und links hiervon angeordneten Austrittsöffnungen 6, 7, 8 des Vorratsbehälters 1 mit den diesen nachgeordneten Dosierorganen 100 ab. An dem Aufbau 25 kann ferner z.B. ein Aufstiegspodest 26 angeordnet sein, welches über eine Leiter zugänglich ist. Ferner ist an der Strebe 10 ein Abstellfuß 27 schwenkbar befestigt.

Wie insbesondere aus den Fig. 3 und 4 hervorgeht, sind vor der Vorderwand 4 des Vorratsbehälters 1 zwei Gebläse 28, 29 angeordnet, welche zur Erzeugung eines Luftförderstromes zum Transport des mittels der Dosierorgane 100 dosierten Verteilgutes durch die Förderleitungen dienen und aus Platzgründen beispielsweise mit ihrer Achse quer zur Fahrtrichtung angeordnet sind. Die Druckleitung 30 eines jeden Gebläses 28, 29 ist z.B. durch den Vorratsbehälter 1 hindurch geführt und weist je einen, einem jeden Dosierorgan 100 zugeordneten Abgang 31, 32, 33 auf, welcher stromauf eines jeweiligen Dosierorgans 100 an einen jeweiligen Luftverteiler 34, 35, 36 mündet, beispielsweise mittels nicht zeichnerisch wiedergegebener Schlauchleitungen. Letzterer teilt die Druckluft auf die einem jeden Dosierorgan 100 zugeordnete Anzahl an Förderleitungen 37 auf, von welchen in der Fig. 4 aus Veranschaulichungsgründen nur die vorne liegenden Förderleitungen 37 gezeigt sind. Unmittelbar stromab eines jeden Luftverteilers 34, 35, 36 ist jeder Förderleitung 37 eine Übergabekammer 38, 39, 40 zugeordnet, welche in üblicher Weise mit einem eine Düse und einen Diffusor umfassenden Injektor (nicht gezeigt) ausgestattet sein kann und in welche das dosierte Verteilgut von dem jeweiligen Dosierorgan 100 übergeben wird. Während die von dem Gebläse 28 beaufschlagten Förderleitungen 37 in den in Fahrtrichtung linken Ausleger führen, führen die von dem Gebläse 29 versorgten Förderleitungen 37 in den in Fahrtrichtung rechten Ausleger. Die Anzahl an einem jeden Dosierorgan 100 zugeordneten Förderleitungen 37 entspricht der relativ großen Breite einer üblichen Teilbreitenschaltung während des Betriebs. Die Förderleitungen 37 können ferner zwischen den Dosierorganen 100 als getrennte Abschnitte ausgebildet sein, um einen Abschnitt derselben, z.B. gemeinsam mit einer jeweiligen Übergabekammer 38, 39, 40, nach unten klappen (vgl. die strichlinierte Darstellung der Fig. 4) und auf diese Weise z.B. Abdrehproben durchführen oder den Vorratsbehälter 1 entleeren zu können.

Die Fig. 5 zeigt eine Detailansicht der pneumatischen Verteilmaschine im Bereich eines ihrer Dosierorgane 100, welches eine rotierbar angetriebene Dosierwalze 101 aufweist, welche im vorliegenden Fall beispielsweise nach Art einer Nockenwalze ausgestaltet ist, aber je nach Art des Verteilgutes selbstverständlich auch nach Art einer Zellenradwalze oder in beliebiger anderer bekannter Weise ausgebildet sein kann. Jedes Dosierorgan 100 versorgt dabei eine Mehrzahl an - hier fünf - Förderleitungen 37 und umfasst ein Dosiergehäuse 102, welches unterhalb einer jeweiligen Austrittsöffnung 6, 7, 8 des Vorratsbehälters 1 angeordnet ist (siehe oben) und das Verteilgut bis an die Oberfläche der Dosierwalze 101 zu leiten vermag. Das Dosiergehäuse 102 kann beispielweise mittels eines Hebels 52 nach unten schwenkbar sein, um den Raum unterhalb der Dosierwalze 101 zugänglich zu machen und den Vorratsbehälter 1 entleeren zu können.

Wie insbesondere den Fig. 6 bis 8 zu entnehmen ist, umfasst die Dosierwalze 101 eines jeden Dosierorgans 100 im vorliegenden Fall eine der Anzahl an Förderleitungen 37, welche von dem Dosierorgan 100 versorgt sind, entsprechende Anzahl an - hier fünf - von Dosierradsegmenten 103 gebildeten Axialabschnitten, wobei die Dosierradsegmente 103 unabhängig voneinander rotierbar angetrieben sind. Dies geschieht bei dem gezeigten Ausführungsbeispiel mittels je eines, einem jeweiligen Dosierradsegment 103 zugeordneten, unabhängig voneinander drehzahlsteuer- und/oder regelbaren Antriebs 104, z.B. in Form eines Elektromotors, um sowohl einzelne Dosierradsegmente 103 der Dosierwalze 101 stillsetzen als auch insbesondere die Dosierradsegmente 103 mit unterschiedlichen Rotationsgeschwindigkeiten antreiben zu können. Die Dosierradsegmente 103 der Dosierwalze 101 können dabei auf einem sich koaxial zu ihrer Drehachse erstreckenden, im Wesentlichen rohrförmigen Hohlkörper 105 gelagert sein, welcher starr, aber vorzugsweise lösbar, in dem Dosiergehäuse 102 festgelegt ist. Die - hier elektrischen - Antriebe 104 der Dosierradsegmente 103 sind vor äußeren Einwirkungen geschützt im Innern des im Wesentlichen rohrförmigen Hohlkörpers 105 aufgenommen und beispielsweise an Befestigungsflanschen 106 im Innern des Hohlkörpers 105 (vgl. die Fig. 8) verschraubt. Der im Wesentlichen rohrförmige Hohlkörper 105 besitzt eine insgesamt etwa kreiszylindrische Form und umfasst im vorliegenden Fall eine Mehrzahl an in Axialrichtung beabstandeter Abschnitte 107, welche sich um seinen gesamten Umfang erstrecken und zur Aufnahme von an deren Außenumfang aufgebrachten Lagern 108 dienen, mittels welcher ein jedes Dosierradsegment 104 an seinen beiden axialen Enden und in Axialrichtung aneinander angrenzend gelagert ist. Die vollumfänglichen Abschnitte 107 sind dabei einerseits an den beiden Enden des im Wesentlichen rohrförmigen Hohlkörpers 105 vorgesehen, andererseits in äquidistanten Abständen in Axialrichtung desselben, wobei der Axialabstand der vollumfänglichen Abschnitte 107 an die axiale Länge eines jeden Dosierradsegmentes 103 angepasst ist. In der Fig. 6 und 7 ist erkennbar, dass die Lager 108 im vorliegenden Fall zwecks Erzielung eines sehr geringen Bauraumes als Gleitlager ausgebildet sind.

Wie insbesondere aus der Fig. 8 hervorgeht, weist der im Wesentlichen rohrförmige Hohlkörper 105 - in Axialrichtung betrachtet - zwischen seinen vollumfänglichen Abschnitten 107 jeweils eine oder mehrere Durchgangsöffnungen 111 auf, welche im montierten Zustand der Dosierradsegmente 103 von diesen jeweils übergriffen sind. Die Durchgangsöffnungen 111 des Hohlkörpers 105 dienen zur Verbindung eines jeweiligen Antriebs 104 mit einem jeweiligen Dosierradsegment 103, welches zu diesem Zweck eine sich um einen Innenumfangsabschnitt erstreckende Innenverzahnung 112 aufweist, welche durch eine jeweilige Durchgangsöffnung 111 des Hohlkörpers 105 freigelassen ist (vgl. insbesondere die Fig. 8). Die Innenverzahnung 112 eines jeweiligen Dosierradsegmentes 103 steht mit je einem Zahnrad 113 im Eingriff, welches auf je einer, zweckmäßigerweise in Bezug auf die Drehachse der Dosierradsegmente 103 exzentrisch angeordneten, Abtriebswelle 114 eines jeweiligen Antriebs 104 sitzt. Der Antrieb 104 eines jeden Dosierradsegmentes steht üblicherweise mit einer nicht zeichnerisch wiedergegebenen Steuer- und/oder Regeleinrichtung der Verteilmaschine in Wirkverbindung, um die einzelnen Dosierradsegmente 103 der Dosierwalzen 101 der Dosierorgane 100 unabhängig voneinander drehzahlsteuern und/oder -regeln zu können und dabei einerseits eine sehr genaue Verteilung des Verteilgutes auf dem Feld, z.B. gemäß elektronischer Applikationskarten, sicherzustellen, wobei die Position der Verteilmaschine auf dem Feld mittels bekannter Positionserfassungssysteme, wie GPS oder dergleichen, in Echtzeit ermittelt werden kann.

Um sicherzustellen, dass ein jeweiliges Dosierradsegment 103 der Dosierwalze 101 eines jeden Dosierorgans 100 ausschließlich das ihm zugeordnete Verteilorgan versorgt und nicht etwa von benachbarten Dosierradsegmenten 103 bereits dosierte Massenströme an Verteilgut sich teilweise vermischen bzw. in die Übergabekammer 38, 39 40 einer benachbarten Förderleitung 37 gelangen, erweist es sich im Übrigen von Vorteil, wenn der Dosierwalze 101 eine Mehrzahl an Leitblechen 53 (vgl. die Fig. 5) zugeordnet ist, welche in einem, einem jeweiligen Axialabschnitt der Dosierwalze 101 gemäß einem jeweiligen Dosierradsegment 103 entsprechenden Abstand voneinander angeordnet sind und sich vom Außenumfang der Dosierwalze 101 zwischen jeweils zwei benachbarten Dosierradsegmenten 103 nach unten bis zum oberen Einlass einer jeden Übergabekammer 34, 35, 36 erstrecken. In der Fig. 5 ist auch erkennbar, dass der im Wesentlichen rohrförmige Hohlkörper 105 vorzugsweise an zumindest einem seiner Enden das Dosiergehäuse 102 nach außen durchsetzt, um die in seinem Innern untergebrachten Antriebe 104 elektrisch zu kontaktieren, indem die Versorgungsleitungen gleichfalls im Innern des Hohlkörpers 105 verlegt sind.

In der Fig. 10 ist eine Ausführungsform des einen, insgesamt mit dem Bezugszeichen 200 versehenen Auslegers der pneumatischen Verteilmaschine gemäß den Fig. 1 bis 5 schematisch wiedergegeben, wobei der andere Ausleger eine entsprechende Ausgestaltung besitzt und daher nicht ebenfalls zeichnerisch wiedergegeben ist. Der Ausleger 200 umfasst eine Mehrzahl an - im vorliegenden Fall vier - schwenkbar aneinander angelenkten Auslegersegmenten, nämlich - jeweils in der ausgeklappten Betriebsposition des Auslegers 200 gemäß der Fig. 10 betrachtet - ein inneres, erstes Auslegersegment 201, ein zweitinnerstes, zweites Auslegersegment 202, ein drittinnerstes bzw. zweitäußerstes, drittes Auslegersegment 203 und ein äußeres, viertes Auslegersegment 204. An dem ersten Auslegersegment 201 ist das eine Ende einer, beispielsweise elektrisch oder hydraulisch betätigten und vorzugsweise fernbedienbaren, Kolben-/Zylindereinheit 205 angelenkt, deren anderes Ende an dem weiter oben unter Bezugnahme auf die Fig. 1 beschriebenen Hubrahmen 9 angelenkt ist, an welchem auch das erste Auslegersegment 201 des Auslegers 200 schwenkbar befestigt ist, so dass das erste Auslegersegment 201 um eine etwa horizontale erste Schenkachse A₁ zwischen seiner in der Fig. 10 dargestellten Betriebsposition, in welcher es sich etwa quer zur Fahrtrichtung der Verteilmaschine erstreckt, und seiner Ruheposition, in welcher es z.B. im Wesentlichen vertikal nach oben an eine der Längsseiten der Verteilmaschine oder an deren Heckseite angeklappt ist (nicht gezeigt), hin und her verschwenkt werden kann. Das zweite Auslegersegment 202 ist an dem ersten Auslegersegment 201 um eine - bezogen auf die ausgeklappte Betriebsposition des Auslegers 200 - z.B. gleichfalls horizontale, zweite Schwenkachse A₂ schwenkbar angelenkt, um es zwischen seiner in der Fig. 10 dargestellten Betriebsposition, in welcher es sich etwa quer zur Fahrtrichtung der Verteilmaschine erstreckt, und seiner Ruheposition, in welcher es z.B. im Wesentlichen parallel gegen das erste Auslegersegment 201 angeklappt ist, hin und her verschwenken zu können, was manuell oder insbesondere in fernsteuerbarer Weise motorisch, z.B. hydraulisch oder elektrisch (nicht gezeigt), geschehen kann. Das dritte Auslegersegment 203 ist an dem dem ersten Auslegersegment 201 entgegengesetzten Ende des zweiten Auslegersegmentes 202 um eine - bezogen auf die ausgeklappte Betriebsposition des Auslegers 200 - z.B. vertikale, dritte Schwenkachse A₃ schwenkbar angelenkt, um es zwischen seiner in der Fig. 10 dargestellten Betriebsposition, in welcher es sich etwa quer zur Fahrtrichtung der Verteilmaschine erstreckt, und seiner Ruheposition, in welcher es z.B. im Wesentlichen parallel gegen das erste 201 und zweite Auslegersegment 202 angeklappt ist, hin und her verschwenken zu können, was wiederum manuell oder insbesondere in fernsteuerbarer Weise motorisch, z.B. hydraulisch oder elektrisch (nicht gezeigt), geschehen kann. Das vierte Auslegersegment 204 ist an dem dem zweiten Auslegersegment 202 entgegengesetzten Ende des dritten Auslegersegmentes 203 um eine - bezogen auf die ausgeklappte Betriebsposition des Auslegers 200 - z.B. wiederum horizontale, vierte Schwenkachse A₄ schwenkbar angelenkt, um es zwischen seiner in der Fig. 10 dargestellten Betriebsposition, in welcher es sich etwa quer zur Fahrtrichtung der Verteilmaschine erstreckt, und seiner Ruheposition, in welcher es z.B. im Wesentlichen parallel gegen das erste 201, zweite 202 und dritte Auslegersegment 203 angeklappt ist, hin und her verschwenken zu können, was wiederum manuell oder insbesondere in fernsteuerbarer Weise motorisch, z.B. hydraulisch oder elektrisch (nicht gezeigt), geschehen kann.

Sofern die Auslegersegmente 201, 202, 203, 204 des Auslegers 200 insbesondere jeweils motorisch verschwenkbar sind, so geschieht die Ansteuerung der z.B. von Kolben-/Zylindereinheiten gebildeten motorischen Antriebe vorzugsweise mittels einer Logikschaltung derart, dass beim Ausklappen eines jeweiligen Auslegers 200 von seiner Ruhe- bzw. Transportposition in seine in der Fig. 10 dargestellte Betriebsposition zuerst die jeweils inneren Auslegersegmente 201 mit dem hieran noch angeklappten Paket aus zweiten 202, dritten 203 und vierten Auslegersegmenten 204 unter Sicherstellung einer ausreichender Bodenfreiheit und einer maximalen Ausklapphöhe von z.B. etwa 4 m um die Schwenkachse A₁ nach außen verschwenkt werden. Sobald sich die inneren Auslegersegmente 201 eines jeweiligen Auslegers 200 in ihrer etwa horizontalen Betriebsposition befinden, werden die weiteren Auslegersegmente 202, 203, 204 sukzessive gleichfalls um die Schwenkachsen A₂, A₃ bzw. A₄ in die Betriebsposition ausgeklappt. Das Einklappen der Ausleger 200 aus ihrer Betriebs- in die Ruhe- bzw. Transportposition erfolgt in umgekehrter Weise und ebenfalls unter Vermeidung sowohl einer Bodenberührung als auch eines Überschreitens der maximal zulässigen Höhe.

An den Auslegersegmenten 201, 202, 203, 204 des Auslegers 200 sind, zweckmäßigerweise unter äquidistanter Anordnung, sowohl die Verteilorgane 60 (vgl. die Fig. 9) der Verteilmaschine festgelegt als auch die zu einem jeweiligen Verteilorgan 60 führenden Förderleitungsabschnitte 37a geführt, welche sich an die von einer jeweiligen Übergabekammer 38, 39, 40 (vgl. insbesondere die Fig. 5) abgehenden Förderleitungen 37 anschließen, wobei ein jeder Ausleger 200 üblicherweise die Hälfte aller Förderleitungsabschnitte 37a aufnimmt, welche in unterschiedlichen Abständen von der Längsachse der Verteilmaschine, z.B. mittels eines gekrümmten Endabschnittes, an einem jeweiligen Verteilorgan 60 enden. Wie in der Fig. 9 erkennbar, sind die Verteilorgane 60 im Falle des gezeigten Pneumatik-Düngerstreuers z.B. in Form von Pralltellern 61 bzw. Prallplatten ausgestaltet, um den aus einem jeweiligen Förderleitungsabschnitt 37a, z.B. über einen endständigen Krümmer (vgl. die Fig. 9), austretenden Verteilgutstrom in jeweils nebeneinander angeordnete Flächenbereiche auf dem Boden zu verteilen. Zumindest einige der Prallteller 61 können hierbei mit als solchen bekannten Begrenzungseinrichtungen 63 versehen sein, um z.B. zu verhindern, dass das Verteilgut entlang der Fahrspuren der Verteilmaschine oder einer diese ziehenden oder tragenden Zugmaschine, wie eines Traktors, verteilt wird.

Wie insbesondere den Fig. 11 bis 13 zu entnehmen ist, welche jeweils eine Detailansicht eines Abschnittes eines der Auslegersegmente des Auslegers 200 zeigen, wie z.B. des Auslegersegmentes 203 gemäß Fig. 10, umfasst das Auslegersegment 203 - so wie insbesondere auch die Auslegersegmente 201, 202, 204 - im vorliegenden Fall vier sich vornehmlich in Längsrichtung des Auslegers 200 erstreckende Längsstreben 206, 207, 208, 209, welche im vorliegenden Fall einen etwa rechteckigen Querschnitt besitzen und im Wesentlichen parallel angeordnet sein oder in Erstreckungsrichtung des Auslegers 200 von innen nach außen auch geringfügig konvergieren können, so dass sich der - hier etwa rechteckige - Querschnitt des Auslegers 200 von innen nach außen verjüngt. Die Längsstreben 206, 207, 208, 209 sind mittels einer Mehrzahl an Verbindungsstreben 210 miteinander verbunden, wobei die Verbindungsstreben 210 im vorliegenden Fall z.B. jeweils eine der unteren Längsstreben 206, 207 mit einer der oberen Längsstreben 208, 209 verbinden und etwa V- bzw. zickzackförmig zwischen den jeweiligen Längsstreben 206, 207; 208, 209 angeordnet sind, wobei sie selbstverständlich auch andersartig, z.B. etwa X-förmig zwischen den jeweiligen Längsstreben 206, 207; 208, 209 angeordnet sein können (nicht gezeigt), um für eine hohe Steifigkeit des Auslegers 200 zu sorgen und während des Betriebs der Verteilmaschine auf den Ausleger 200 einwirkende Drehmomente aufnehmen zu können.

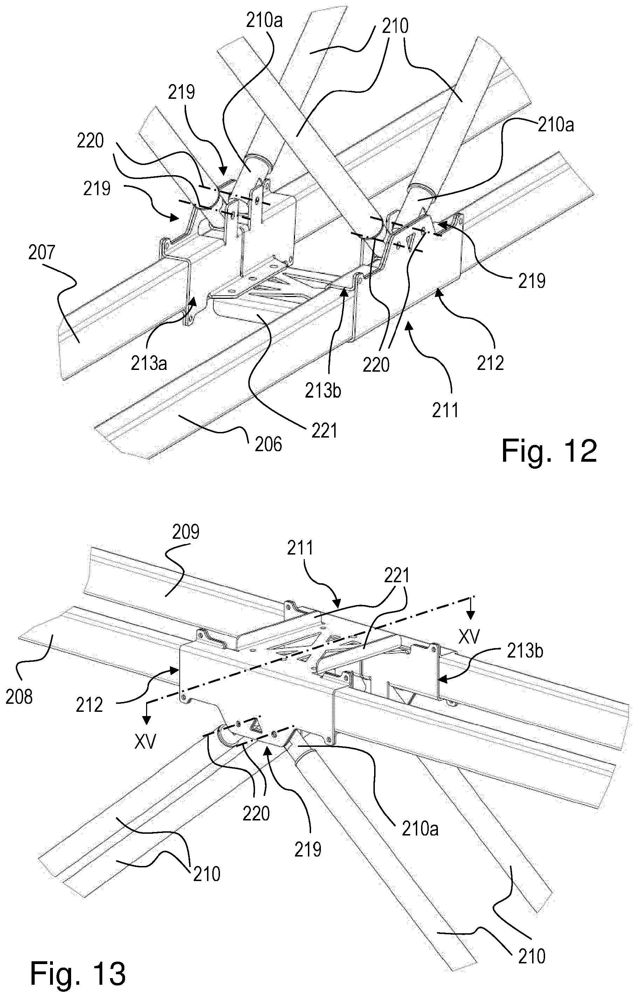

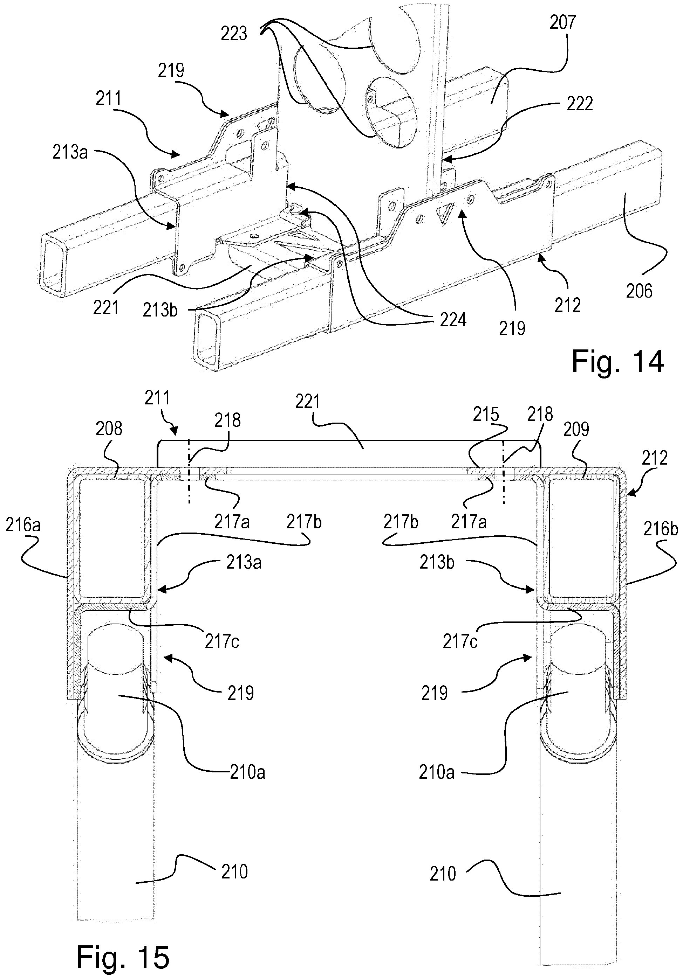

Wie insbesondere aus den Fig. 12 und 13 hervorgeht, sind die Verbindungsstreben 210 mittels formstabiler Kopplungselemente 211, welche beispielsweise aus Leichtmetall, wie Aluminium oder dessen Legierungen, oder auch aus anderen Metallwerkstoffen, wie Stahl, Edelstahl etc., gefertigt sein können, jeweils an zwei benachbarten Längsstreben
- hier: jeweils einerseits an dem Paar der beiden unteren Längsstreben 206, 207, andererseits an dem Paar der beiden oberen Längsstreben 208, 209 - des Auslegers 200 festgelegt, wobei die Kopplungselemente 211 die beiden benachbarten Längsstreben 206, 207; 208, 209 jeweils paarweise miteinander verbinden. Die jeweiligen Paare der Längsstreben 206, 207; 208, 209 sind dabei jeweils ausschließlich kraft- bzw. reibschlüssig und/oder stoffschlüssig mittels Klebern an einem jeweiligen Kopplungselement 211 festgelegt (vgl. insbesondere die Fig. 15), wobei sie beispielsweise an einem jeweiligen Kopplungselement 211 verklemmt, vorzugsweise unter Zwischenanordnung einer reibungserhöhenden Ummantelung oder Beschichtung, z.B. aus Elastomermaterialien (nicht gezeigt), und/oder mittels geeigneter Kleber verklebt sein können.

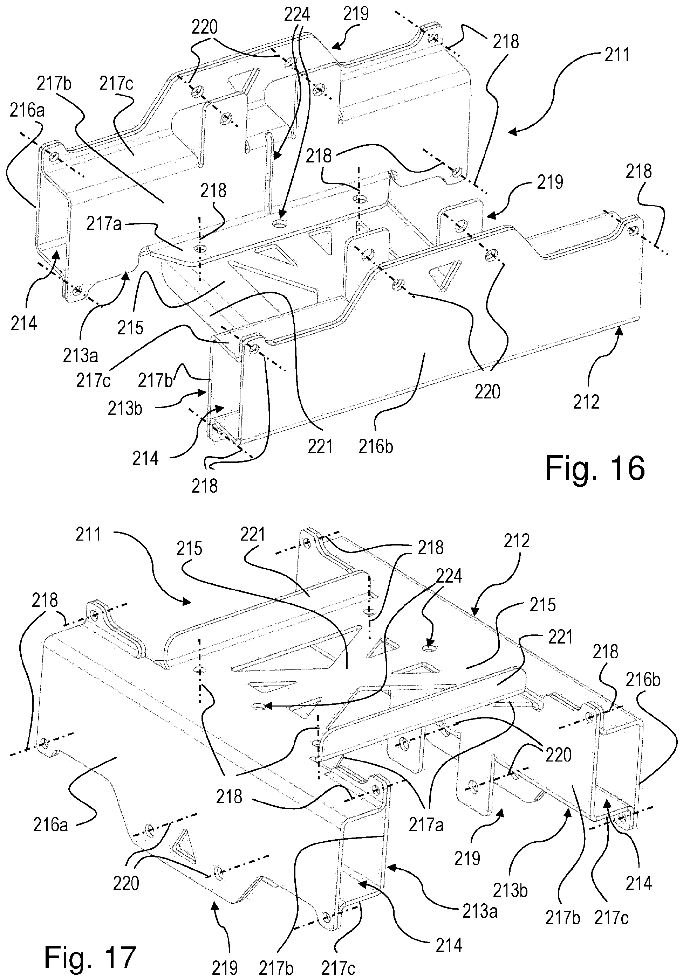

Wie insbesondere auch den Detailansichten der Fig. 15, 16 und 17 zu entnehmen ist, weisen die Kopplungselemente 211 zu diesem Zweck bei dem vorliegenden Ausführungsbeispiel einerseits ein erstes Profilteil 212 auf, welches sich jeweils zwischen den beiden benachbarten Längsstreben 206, 207; 208, 209 des Auslegers 200 erstreckt. Andererseits weisen die Kopplungselemente 211 jeweils zwei zweite, lösbar an dem ersten Profilteil 212 befestigte zweite Profilteile 213a, 213b auf, wobei zwischen dem ersten Profilteil 212 und einem jeweiligen zweiten Profilteil 213a, 213b jeweils eine Aufnahme 214 (vgl. die Fig. 16 und 17) für eine jeweilige der beiden benachbarten Längsstreben 206, 207; 208, 209 gebildet ist, in welcher letztere in der vorbeschriebenen Weise kraft- bzw. reibschlüssig und/oder stoffschlüssig mittels Klebern festgelegt sind. Das erste Profilteil 212 der Kopplungselemente 211 ist hierbei im Wesentlichen in Form eines U-Profils ausgebildet, dessen U-Steg 215 sich zwischen den beiden benachbarten Längsstreben 206, 207; 208, 209 des Auslegers 200 erstreckt und dessen U-Schenkel 216a, 216b die einander abgewandten Seiten der beiden benachbarten Längsstreben 206, 207; 208, 209 umgreifen. Die beiden zweiten Profilteile 213a, 213b des Kopplungselementes 211 sind jeweils im Wesentlichen in Form eines Z-Profils ausgestaltet, dessen einer endständiger Z-Steg 217a jeweils an dem U-Steg 215 des U-Profils des ersten Profilteils 212 lösbar befestigt ist und deren beiden anderen Z-Stege 217b, 217c gemeinsam mit dem U-Profil des ersten Profilteils 212 - oder genauer: mit einem jeweiligen U-Schenkel 213a, 213b und dem jeweiligen, an diesen angrenzenden Abschnitt des U-Stegs 215 des U-Profils - die jeweilige Aufnahme 214 für eine jeweilige der beiden benachbarten Längsstreben 206, 207, 208, 209 bilden. Darüber hinaus ist das erste Profilteil 212 der Kopplungselemente 211 im Bereich seiner die Aufnahme 214 für eine jeweilige der beiden benachbarten Längsstreben 206, 207, 208, 209 bildenden U-Schenkel 216a, 216b lösbar an einem jeweiligen endständigen Z-Steg 217c des Z-Profils eines jeweiligen zweiten Profilteils 213a, 213b befestigt. Zu diesem Zweck weist das erste Profilteil 212 der Kopplungselemente 211 zu den beiden zweiten Profilteilen 213a, 213b komplementäre Bohrungen auf, so dass die zweiten Profilteile 213a, 213b mittels Schrauben oder Bolzen 218 lösbar an dem ersten Profilteil 212 befestigt werden können und durch Anziehen der Schrauben oder Bolzen 218 eine einstellbare Klemmkraft für die in den Aufnahmen 214 kraft- bzw. reibschlüssig und/oder stoffschlüssig mittels Klebern festgelegten Längsstreben 206, 207; 208, 209 des Auslegers 200 aufgebracht werden kann. (vgl. die Fig. 16 und 17).

Um die Verbindungsstreben 210 lösbar an den Kopplungselementen 211 zu befestigen, sind letztere mit ersten Befestigungsmitteln 219 ausgestattet (vgl. wiederum die Fig. 15 sowie insbesondere die Fig. 16 und 17), welche gleichfalls von Bohrungen gebildet sind, welche in entsprechenden Befestigungslaschen sowohl des ersten Profilteils 212 als auch der beiden zweiten Profilteile 213a, 213b der Kopplungselemente 211 vorgesehen sind. Die Verbindungsstreben 210 sind an ihren Enden mit hierzu komplementären Bohrungen versehen, um sie mittels Schrauben oder Bolzen 220 unter einem praktisch beliebigen Winkel an den Kopplungselementen 211 zu befestigen. Die zur Befestigung der Verbindungsstreben 210 an den Kopplungselementen 211 dienenden Bohrungen sind bei dem zeichnerisch wiedergegebenen Ausführungsbeispiel an insbesondere in den Fig. 12 und 13 erkennbaren endständigen Befestigungsabschnitten 210a der Verbindungsstreben 210 angeordnet, welche einstückig mit den Verbindungsstreben 210 ausgebildet sein können, aber im vorliegenden Fall als separate Metallteile, vorzugsweise aus Leichtmetall, wie Aluminium oder dessen Legierungen, ausgestaltet sind, welche mit den im Übrigen z.B. aus faserverstärkten Kunststoffmaterialien gefertigten Verbindungsstreben 210 verbunden sind, wie dies weiter oben im Einzelnen erläutert ist. Aufgrund der erfindungsgemäßen Verbindung der Längsstreben 206, 207, 208, 209 des Auslegers 200 mit den Verbindungsstreben 210 mittels der Kopplungselemente 211 können die Längsstreben 206, 207, 208, 209 ihrerseits aus faserverstärkten Kunststoffmaterialien, wie z.B. endlosfaserverstärkten Verbundwerkstoffen, gefertigt sein, so dass die Ausleger 200 bei einer sehr hohen Steifigkeit und Festigkeit ein gleichwohl sehr geringes Gewicht besitzen. Darüber hinaus können sowohl die Längsstreben 206, 207, 208, 209 als auch die Verbindungsstreben 210 vorzugsweise von Hohlprofilen gebildet sein (vgl. die Fig. 15), so dass eine bestmögliche Leichtbauweise der Ausleger 200 sichergestellt ist.

Zur weiteren Aussteifung der Ausleger 200 können die Kopplungselemente 211 überdies beispielsweise mit Versteifungsrippen 221 ausgestattet sein, welche sich im vorliegenden Fall z.B. im Wesentlichen senkrecht zu den beiden jeweiligen hieran festgelegten Längsstreben 206, 207; 208, 209 des Auslegers 200 erstrecken und an dem U-Steg 215 des ersten Profilteils 212 durch Umbiegen deren entgegengesetzten Rändern gebildet sind.

Wie bereits erwähnt, dienen die Ausleger 200 insbesondere zur Führung der endständige Förderleitungsabschnitte 37a der Förderleitungen 37 der Verteilmaschine, welche zum Schutz vor mechanischen Einwirkungen zweckmäßigerweise im Innern des von den Längsstreben 206, 207, 208, 209 der Ausleger 200 gebildeten Querschnitte angeordnet sind. Wie aus der Fig. 14 hervorgeht, sind zur Führung der Förderleitungsabschnitte 37a entlang der Ausleger 200 hierbei im Wesentlichen plattenförmige Führungsteile 222 vorgesehen, welche sich etwa parallel zu dem durch die Längsstreben 206, 207, 208, 209 gebildeten Querschnitt eines jeweiligen Auslegers 200 erstrecken und mit einer Mehrzahl an Führungsöffnungen 223 versehen sind, welche zur Aufnahme eines jeweiligen Förderleitungsabschnittes 37a dienen. Um die Förderleitungsabschnitte 37a hierbei ohne Zuhilfenahme zusätzlicher Führungsmittel mittels der Führungsteile 222 an den Auslegern 200 festzulegen, weisen die Kopplungselemente 211 im vorliegenden Fall ferner zweite Befestigungsmittel 224 zur lösbaren Befestigung der Führungsteile 222 auf. Wie sich aus den Fig. 16 und 17 ergibt, können die zweiten Befestigungsmittel 224 der Kopplungselemente 211 beispielsweise einerseits Bohrungen, welche z.B. im zentralen Bereich des U-Stegs 215 des ersten Profilteils 212 angeordnet sind und zur Verschraubung der Führungsteile 222 hieran dienen, andererseits in Bezug auf den Querschnitt der plattenförmigen Führungsteile 222 komplementäre Schlitze zur formschlüssigen Aufnahme der Führungsteile 222 besitzen, welche z.B. an den einander zugewandten Z-Stegen 213b der zweiten Profilteile 213a, 213b angeordnet sind.

## Patentansprüche

1. Landwirtschaftliche Verteilmaschine, umfassend:
- wenigstens einen von einem Rahmen getragenen Vorratsbehälter (1) zur Aufnahme von Verteilgut;
- wenigstens ein dem Vorratsbehälter (1) nachgeordnetes Dosierorgan (100);
- wenigstens einen an dem Rahmen und/oder an dem Vorratsbehälter (1) schwenkbar angeordneten Ausleger (200), welcher wenigstens drei sich vornehmlich in Erstreckungsrichtung des Auslegers (200) erstreckende Längsstreben (206, 207, 208, 209) aufweist, von welchen zumindest zwei Längsstreben (206, 207, 208, 209) mittels einer Mehrzahl an Verbindungsstreben (210) miteinander verbunden sind;
- eine Mehrzahl an von dem Ausleger (200) getragenen und mit Abstand voneinander angeordneten Verteilorganen (60); und
- eine Mehrzahl an Förderleitungen (37), welche zur Überführung des Verteilgutes an die Verteilorgane (60) dienen und von welchen zumindest endständige Förderleitungsabschnitte (37a) von dem Ausleger (200) getragen sind,
wobei zumindest einige Verbindungsstreben (210) mittels formstabiler Kopplungselemente (211) jeweils an zwei benachbarten Längsstreben (206, 208; 207, 209) des Auslegers (200) festgelegt sind, wobei die Kopplungselemente (211) zwei benachbarte Längsstreben (206, 207; 208, 209) paarweise miteinander verbinden und an den beiden benachbarten Längsstreben (206, 207; 208, 209) festgelegt sind, und wobei die Kopplungselemente (211) ferner erste Befestigungsmittel (219) aufweisen, welche zur Befestigung der Verbindungsstreben (210) an dem Kopplungselement (211) dienen, **dadurch gekennzeichnet, dass**
die Kopplungselemente (211) ein erstes Profilteil (212) aufweisen, welches sich zwischen den beiden benachbarten Längsstreben (206, 207; 208, 209) des Auslegers (200) erstreckt, und dass die Kopplungselemente (211) wenigstens ein an dem ersten Profilteil (212) befestigtes zweites Profilteil (213a, 213b) aufweisen, wobei zwischen dem ersten Profilteil (212) und dem wenigstens einen zweiten Profilteil (213a, 213b) jeweils eine Aufnahme (214) für eine jeweilige der beiden benachbarten Längsstreben (206, 207; 208, 209) gebildet ist, in welcher eine jeweilige Längsstrebe (206, 207; 208, 209) kraftschlüssig und/oder stoffschlüssig mittels Klebern festgelegt ist.

2. Verteilmaschine nach Anspruch 1, **dadurch gekennzeichnet, dass** das wenigstens eine zweite Profilteil (213a, 213b) lösbar an dem ersten Profilteil (212) befestigt ist.

3. Verteilmaschine nach Anspruch 1 oder 2, **dadurch gekennzeichnet, dass** der Ausleger (200) wenigstens vier, insbesondere genau vier, Längsstreben (206, 207, 208, 209) umfasst, wobei die Kopplungselemente (211) jeweils zwei benachbarte Längsstreben (206, 207; 208, 209) jeweils paarweise miteinander verbinden und an den jeweils benachbarten Längsstreben (206, 207; 208, 209) kraftschlüssig und/oder stoffschlüssig mittels Klebern festgelegt sind, und wobei die Verbindungsstreben (210) an den ersten Befestigungsmitteln (219) jeweils eines Kopplungselementes (211) eines jeweiligen Paares der Längsstreben (206, 207, 208, 209) befestigt sind.

4. Verteilmaschine nach einem der Ansprüche 1 bis 3, **dadurch gekennzeichnet, dass** das erste Profilteil (212) des Kopplungselementes (211) im Wesentlichen in Form eines U-Profils ausgebildet ist, dessen U-Steg (215) sich zwischen den beiden benachbarten Längsstreben (206, 207; 208, 209) des Auslegers (200) erstreckt und dessen U-Schenkel (216a, 216b) die einander abgewandten Seiten der beiden benachbarten Längsstreben (206, 207; 208, 209) umgreifen, und wobei das wenigstens eine zweite Profilteil (213a, 213b) des Kopplungselementes (211)
- zwei im Wesentlichen in Form von Z-Profilen ausgebildete zweite Profilteile (213a, 213b) umfasst, deren einer endständiger Z-Steg (217a) jeweils zumindest an dem U-Steg (215) des U-Profils des ersten Profilteils (212), insbesondere lösbar, befestigt ist und deren beiden anderen Z-Stege (217b, 217c) gemeinsam mit dem U-Profil des ersten Profilteils (212) die jeweilige Aufnahme (214) für eine jeweilige der beiden benachbarten Längsstreben (206, 207; 208, 209) bilden; oder
- gleichfalls im Wesentlichen in Form eines U-Profils mit an den freien Enden der U-Schenkel angeordneten, sich von dem U-Steg fort erstreckenden Endstegen ausgebildet ist, dessen U-Steg zumindest an dem U-Steg (215) des U-Profils des ersten Profilteils (212), insbesondere lösbar, befestigt ist und dessen U-Schenkel mit deren Endstegen gemeinsam mit dem U-Profil des ersten Profilteils (212) die jeweilige Aufnahme (214) für eine jeweilige der beiden benachbarten Längsstreben (206, 207; 208, 209) bilden.

5. Verteilmaschine nach Anspruch 4, **dadurch gekennzeichnet, dass** das erste Profilteil (212) des Kopplungselementes (211) ferner im Bereich seiner die Aufnahme (214) für eine jeweilige der beiden benachbarten Längsstreben (206, 207; 208, 209) bildenden U-Schenkel (216a, 216b), insbesondere lösbar,
- an einem jeweiligen endständigen Z-Steg (217c) eines jeweiligen Z-Profils des zweiten Profilteils (213a, 213b); oder
- an einem jeweiligen Endsteg des U-Profils des zweiten Profilteils,
befestigt ist.

6. Verteilmaschine nach einem der Ansprüche 1 bis 5, **dadurch gekennzeichnet, dass** das erste Profilteil (212) des Kopplungselementes (211) zu dem wenigstens einen zweiten Profilteil (213a, 213b) des Kopplungselementes (211) komplementäre Bohrungen aufweist, um das erste Profilteil (212) mittels Schrauben oder Bolzen (218) lösbar an dem wenigstens einen zweiten Profilteil (213a, 213b) zu befestigen.

7. Verteilmaschine nach einem der Ansprüche 1 bis 6, **dadurch gekennzeichnet, dass** die zur Befestigung der Verbindungsstreben (210) an dem Kopplungselement (211) dienenden ersten Befestigungsmittel (219) der Kopplungselemente (211) von Bohrungen gebildet sind, wobei eine jeweilige Verbindungsstrebe (210) hierzu komplementäre Bohrungen aufweist, um die Verbindungsstreben (210) mittels Schrauben oder Bolzen (220), insbesondere unter einem veränderbaren Winkel, an den Kopplungselementen (211) zu befestigen.

8. Verteilmaschine nach Anspruch 7, **dadurch gekennzeichnet, dass** sowohl das erste Profilteil (212) als auch das wenigstens eine zweite Profilteil (213a, 213b) des Kopplungselementes (211) erste Befestigungsmittel (219) in Form von komplementären Bohrungen aufweisen, um die Verbindungsstreben (210) mittels Schrauben oder Bolzen (220), insbesondere unter einem veränderbaren Winkel, sowohl an dem ersten Profilteil (212) als auch an dem wenigstens einen zweiten Profilteil (213a, 213b) des Kopplungselementes (211) zu befestigen.

9. Verteilmaschine nach einem der Ansprüche 1 bis 8, **dadurch gekennzeichnet, dass** zumindest einige Verbindungsstreben (210) endständige Befestigungsabschnitte (210a) aufweisen, welche zu ihrer, insbesondere lösbaren, Befestigung an den ersten Befestigungsmitteln (219) der Kopplungselemente (211) dienen, wobei die Befestigungsabschnitte (210a) der Verbindungsstreben (210) insbesondere Bohrungen aufweisen.

10. Verteilmaschine nach einem der Ansprüche 1 bis 9, **dadurch gekennzeichnet, dass** die Kopplungselemente (211) ferner Versteifungsrippen (221) aufweisen, welche sich insbesondere im Wesentlichen senkrecht zu den beiden hieran festgelegten Längsstreben (206, 207, 208, 209) des Auslegers (200) erstrecken.

11. Verteilmaschine nach einem der Ansprüche 1 bis 10, **dadurch gekennzeichnet, dass** zumindest einige endständige Förderleitungsabschnitte (37a) der Förderleitungen (37) zumindest abschnittsweise im Innern des von den Längsstreben (206, 207, 208, 209) des Auslegers (200) gebildeten Querschnittes geführt sind.

12. Verteilmaschine nach Anspruch 11, **dadurch gekennzeichnet, dass** zumindest einige Kopplungselemente (211) ferner zweite Befestigungsmittel (224) aufweisen, welche zur, vorzugsweise lösbaren, Befestigung von Führungsteilen (222) für die von dem Ausleger (200) getragenen endständigen Förderleitungsabschnitte (37a) der Förderleitungen (37) an dem Kopplungselement (211) dienen, wobei die Führungsteile (222) insbesondere im Wesentlichen plattenförmig mit einer Mehrzahl an Führungsöffnungen (223) ausgebildet sind, welche zur Aufnahme eines jeweiligen Förderleitungsabschnittes (37a) dienen, wobei die zweiten Befestigungsmittel (224) der Kopplungselemente (211)
- Bohrungen zur Befestigung der Führungsteile (222) mittels Schrauben oder Bolzen; und/oder
- in Bezug auf den Querschnitt der plattenförmigen Führungsteile (222) komplementäre Schlitze zur formschlüssigen Aufnahme der plattenförmigen Führungsteile (222)
aufweisen.

13. Verteilmaschine nach einem der Ansprüche 1 bis 12, **dadurch gekennzeichnet, dass**
- die Längsstreben (206, 207, 208, 209) des wenigstens einen Auslegers (200) einen mehreckigen, insbesondere viereckigen, Querschnitt aufweisen, und/oder
- zumindest die Längsstreben (206, 207, 208, 209), insbesondere sowohl die Längsstreben (206, 207, 208, 209) als auch die Verbindungsstreben (210), des wenigstens einen Auslegers (200) von Hohlprofilen gebildet sind.

14. Verteilmaschine nach einem der Ansprüche 1 bis 13, **dadurch gekennzeichnet, dass**
- zumindest die Längsstreben (206, 207, 208, 209), insbesondere sowohl die Längsstreben (206, 207, 208, 209) als auch die Verbindungsstreben (210), des wenigstens einen Auslegers (200) vornehmlich aus einem faserverstärkten Kunststoffmaterial gefertigt sind; und/oder
- die Kopplungselemente (211) aus Metall, insbesondere aus Leichtmetall, gefertigt sind.

15. Verteilmaschine nach einem der Ansprüche 1 bis 14, **dadurch gekennzeichnet, dass** der wenigstens eine Ausleger (200) eine Mehrzahl an schwenkbar aneinander angelenkten Auslegersegmenten (201, 202, 203, 204) umfasst.

## Claims

1. Agricultural distribution machine, comprising:
- at least one storage container (1) supported by a frame for receiving distribution material;
- at least one metering device (100) arranged downstream of the storage container (1);
- at least one boom (200) pivotably arranged on the frame and/or on the storage container (1), which boom comprises at least three longitudinal struts (206, 207, 208, 209) extending predominantly in the direction of extension of the boom (200), at least two longitudinal struts (206, 207, 208, 209) of which are connected to one another by means of a plurality of connecting struts (210);
- a plurality of distribution elements (60) carried by the boom (200) and arranged at a distance from one another; and
- a plurality of conveying lines (37) which serve for transferring the distribution material to the distribution elements (60) and at least terminal conveying line sections (37a) of which are carried by the boom (200),
wherein at least some connecting struts (210) are secured to two adjacent longitudinal struts (206, 208; 207, 209) of the boom (200) by means of dimensionally stable coupling elements (211), respectively, wherein the coupling elements (211) connect two adjacent longitudinal struts (206, 207; 208, 209) in pairs to one another and are secured to the two adjacent longitudinal struts (206, 207; 208, 209), and wherein the coupling elements (211) furthermore comprise first fastening means (219) which serve for fastening the connecting struts (210) to the coupling element (211), **characterized in that** the coupling elements (211) comprise a first profile part (212) which extends between the two adjacent longitudinal struts (206, 207; 208, 209) of the boom (200), and **in that** the coupling elements (211) comprise at least one second profile part (213a, 213b) fastened to the first profile part (212), wherein a receptacle (214) for a respective one of the two adjacent longitudinal struts (206, 207; 208, 209) is formed between the first profile part (212) and the at least one second profile part (213a, 213b), respectively, in which receptacle a respective longitudinal strut (206, 207; 208, 209) is secured by frictional engagement and/or material bond by means of adhesive.

2. Distribution machine according to Claim 1, **characterized in that** the at least one second profile part (213a, 213b) is releasably fastened to the first profile part (212).

3. Distribution machine according to Claim 1 or 2, **characterized in that** the boom (200) comprises at least four, in particular exactly four, longitudinal struts (206, 207, 208, 209), wherein the coupling elements (211) connect two adjacent longitudinal struts (206, 207; 208, 209) in pairs to one another, respectively, and are secured to the respective adjacent longitudinal struts (206, 207; 208, 209) by frictional engagement and/or material bond by means of adhesive, and wherein the connecting struts (210) are fastened to the first fastening means (219) of a respective coupling element (211) of a respective pair of the longitudinal struts (206, 207, 208, 209).

4. Distribution machine according to any one of Claims 1 to 3, **characterized in that** the first profile part (212) of the coupling element (211) is formed substantially in the form of a U-profile, the U-web (215) of which extends between the two adjacent longitudinal struts (206, 207; 208, 209) of the boom (200) and the U-legs (216a, 216b) of which engage around the mutually remote sides of the two adjacent longitudinal struts (206, 207; 208, 209), and wherein the at least one second profile part (213a, 213b) of the coupling element (211)
- comprises two second profile parts (213a, 213b) formed substantially in the form of Z-profiles, one terminal Z-web (217a) of each of which is fastened at least to the U-web (215) of the U-profile of the first profile part (212), in particular releasably, and the two other Z-webs (217b, 217c) of which together with the U-profile of the first profile part (212) form the respective receptacle (214) for a respective one of the two adjacent longitudinal struts (206, 207; 208, 209); or
- is likewise formed substantially in the form of a U-profile with end webs arranged at the free ends of the U-legs and extending away from the U-web, the U-web of which is fastened at least to the U-web (215) of the U-profile of the first profile part (212), in particular releasably, and the U-legs of which together with their end webs and together with the U-profile of the first profile part (212) form the respective receptacle (214) for a respective one of the two adjacent longitudinal struts (206, 207; 208, 209).

5. Distribution machine according to Claim 4, **characterized in that** the first profile part (212) of the coupling element (211) is furthermore, in the region of its U-legs (216a, 216b) forming the receptacle (214) for a respective one of the two adjacent longitudinal struts (206, 207; 208, 209), in particular releasably, fastened - to a respective terminal Z-web (217c) of a respective Z-profile of the second profile part (213a, 213b); or - to a respective end web of the U-profile of the second profile part.

6. Distribution machine according to any one of Claims 1 to 5, **characterized in that** the first profile part (212) of the coupling element (211) comprises bores complementary to the at least one second profile part (213a, 213b) of the coupling element (211), in order to releasably fasten the first profile part (212) to the at least one second profile part (213a, 213b) by means of screws or bolts (218).

7. Distribution machine according to any one of Claims 1 to 6, **characterized in that** the first fastening means (219) of the coupling elements (211) serving for fastening the connecting struts (210) to the coupling element (211) are formed by bores, wherein a respective connecting strut (210) comprises bores complementary thereto in order to fasten the connecting struts (210) to the coupling elements (211) by means of screws or bolts (220), in particular at a variable angle.

8. Distribution machine according to Claim 7, **characterized in that** both the first profile part (212) and the at least one second profile part (213a, 213b) of the coupling element (211) comprise first fastening means (219) in the form of complementary bores in order to fasten the connecting struts (210) by means of screws or bolts (220), in particular at a variable angle, both to the first profile part (212) and to the at least one second profile part (213a, 213b) of the coupling element (211).

9. Distribution machine according to any one of Claims 1 to 8, **characterized in that** at least some connecting struts (210) comprise terminal fastening sections (210a) which serve for their, in particular releasable, fastening to the first fastening means (219) of the coupling elements (211), wherein the fastening sections (210a) of the connecting struts (210) in particular comprise bores.

10. Distribution machine according to any one of Claims 1 to 9, **characterized in that** the coupling elements (211) furthermore comprise stiffening ribs (221) which extend in particular substantially perpendicular to the two longitudinal struts (206, 207, 208, 209) of the boom (200) secured thereto.

11. Distribution machine according to any one of Claims 1 to 10, **characterized in that** at least some terminal conveying line sections (37a) of the conveying lines (37) are guided at least in sections in the interior of the cross-section formed by the longitudinal struts (206, 207, 208, 209) of the boom (200).

12. Distribution machine according to Claim 11, **characterized in that** at least some coupling elements (211) furthermore comprise second fastening means (224) which serve for, preferably releasable, fastening of guide parts (222) for the terminal conveying line sections (37a) of the conveying lines (37) carried by the boom (200) to the coupling element (211), wherein the guide parts (222) are in particular formed substantially plate-shaped with a plurality of guide openings (223) which serve for receiving a respective conveying line section (37a), wherein the second fastening means (224) of the coupling elements (211) comprise
- bores for fastening the guide parts (222) by means of screws or bolts; and/or
- slots complementary in relation to the cross-section of the plate-shaped guide parts (222) for positive-locking reception of the plate-shaped guide parts (222).

13. Distribution machine according to any one of Claims 1 to 12, **characterized in that**
- the longitudinal struts (206, 207, 208, 209) of the at least one boom (200) have a polygonal, in particular quadrilateral, cross-section, and/or
- at least the longitudinal struts (206, 207, 208, 209), in particular both the longitudinal struts (206, 207, 208, 209) and the connecting struts (210), of the at least one boom (200) are formed by hollow profiles.

14. Distribution machine according to any one of Claims 1 to 13, **characterized in that**
- at least the longitudinal struts (206, 207, 208, 209), in particular both the longitudinal struts (206, 207, 208, 209) and the connecting struts (210), of the at least one boom (200) are predominantly manufactured from a fibre-reinforced plastics material; and/or
- the coupling elements (211) are manufactured from metal, in particular from light metal.

15. Distribution machine according to any one of Claims 1 to 14, **characterized in that** the at least one boom (200) comprises a plurality of boom segments (201, 202, 203, 204) pivotably hinged to one another.

## Revendications

1. Machine de distribution agricole, comprenant :
- au moins un réservoir de stockage (1) porté par un châssis pour recevoir du produit à distribuer ;
- au moins un organe de dosage (100) disposé en aval du réservoir de stockage (1) ;
- au moins une rampe (200) disposée de manière pivotante sur le châssis et/ou sur le réservoir de stockage (1), laquelle rampe présente au moins trois longerons (206, 207, 208, 209) s'étendant principalement dans la direction d'extension de la rampe (200), dont au moins deux longerons (206, 207, 208, 209) sont reliés l'un à l'autre au moyen d'une pluralité de potences de liaison (210) ;
- une pluralité d'organes de distribution (60) portés par la rampe (200) et disposés à distance les uns des autres ; et
- une pluralité de conduites de transport (37) qui servent au transfert du produit à distribuer vers les organes de distribution (60) et dont au moins des tronçons terminaux de conduite de transport (37a) sont portés par la rampe (200),
au moins certaines potences de liaison (210) étant reliées au moyen d'éléments de couplage indéformables (211) à chaque fois à deux longerons adjacents (206, 208 ; 207, 209) de la rampe (200), les éléments de couplage (211) reliant par paires deux longerons adjacents (206, 207 ; 208, 209) l'un à l'autre et étant reliés aux deux longerons adjacents (206, 207 ; 208, 209), et les éléments de couplage (211) présentant en outre des premiers moyens de fixation (219) qui servent à la fixation des potences de liaison (210) à l'élément de couplage (211),
**caractérisée en ce que** les éléments de couplage (211) présentent une première pièce profilée (212) qui s'étend entre les deux longerons adjacents (206, 207 ; 208, 209) de la rampe (200), et **en ce que** les éléments de couplage (211) présentent au moins une seconde pièce profilée (213a, 213b) reliée à la première pièce profilée (212), un logement (214) pour un respectif des deux longerons adjacents (206, 207 ; 208, 209) étant formé à chaque fois entre la première pièce profilée (212) et l'au moins une seconde pièce profilée (213a, 213b), logement dans lequel un longeron respectif (206, 207 ; 208, 209) est fixé par adhérence et/ou par liaison de matière au moyen de colle.

2. Machine de distribution selon la revendication 1, **caractérisée en ce que** l'au moins une seconde pièce profilée (213a, 213b) est reliée de manière amovible à la première pièce profilée (212).

3. Machine de distribution selon la revendication 1 ou 2, **caractérisée en ce que** la rampe (200) comprend au moins quatre, en particulier exactement quatre, longerons (206, 207, 208, 209), les éléments de couplage (211) reliant à chaque fois par paires deux longerons adjacents (206, 207 ; 208, 209) l'un à l'autre et étant fixés aux longerons adjacents respectifs (206, 207 ; 208, 209) par adhérence et/ou par liaison de matière au moyen de colle, et les potences de liaison (210) étant reliées aux premiers moyens de fixation (219) de chaque fois un élément de couplage (211) d'une paire respective des longerons (206, 207, 208, 209).

4. Machine de distribution selon l'une quelconque des revendications 1 à 3, **caractérisée en ce que** la première pièce profilée (212) de l'élément de couplage (211) est réalisée essentiellement sous la forme d'un profilé en U, dont l'âme du U (215) s'étend entre les deux longerons adjacents (206, 207 ; 208, 209) de la rampe (200) et dont les ailes du U (216a, 216b) enveloppent les côtés mutuellement éloignés des deux longerons adjacents (206, 207 ; 208, 209), et l'au moins une seconde pièce profilée (213a, 213b) de l'élément de couplage (211)
- comprend deux secondes pièces profilées (213a, 213b) réalisées essentiellement sous la forme de profilés en Z, dont une âme terminale du Z (217a) de chacune est reliée au moins à l'âme du U (215) du profilé en U de la première pièce profilée (212), en particulier de manière amovible, et dont les deux autres âmes du Z (217b, 217c) forment conjointement avec le profilé en U de la première pièce profilée (212) le logement respectif (214) pour un respectif des deux longerons adjacents (206, 207 ; 208, 209) ; ou
- est également réalisée essentiellement sous la forme d'un profilé en U avec des âmes d'extrémité disposées aux extrémités libres des ailes du U et s'étendant à l'opposé de l'âme du U, dont l'âme du U est reliée au moins à l'âme du U (215) du profilé en U de la première pièce profilée (212), en particulier de manière amovible, et dont les ailes du U avec leurs âmes d'extrémité forment conjointement avec le profilé en U de la première pièce profilée (212) le logement respectif (214) pour un respectif des deux longerons adjacents (206, 207 ; 208, 209).

5. Machine de distribution selon la revendication 4, **caractérisée en ce que** la première pièce profilée (212) de l'élément de couplage (211) est en outre, dans la zone de ses ailes du U (216a, 216b) formant le logement (214) pour un respectif des deux longerons adjacents (206, 207 ; 208, 209), en particulier de manière amovible, reliée
- à une âme terminale respective du Z (217c) d'un profilé en Z respectif de la seconde pièce profilée (213a, 213b) ; ou
- à une âme d'extrémité respective du profilé en U de la seconde pièce profilée.

6. Machine de distribution selon l'une quelconque des revendications 1 à 5, **caractérisée en ce que** la première pièce profilée (212) de l'élément de couplage (211) présente des perçages complémentaires de l'au moins une seconde pièce profilée (213a, 213b) de l'élément de couplage (211), afin de fixer de manière amovible la première pièce profilée (212) à l'au moins une seconde pièce profilée (213a, 213b) au moyen de vis ou de boulons (218).

7. Machine de distribution selon l'une quelconque des revendications 1 à 6, **caractérisée en ce que** les premiers moyens de fixation (219) des éléments de couplage (211) servant à la fixation des potences de liaison (210) à l'élément de couplage (211) sont formés par des perçages, une potence de liaison respective (210) présentant à cet effet des perçages complémentaires, afin de fixer les potences de liaison (210) aux éléments de couplage (211) au moyen de vis ou de boulons (220), en particulier sous un angle variable.

8. Machine de distribution selon la revendication 7, **caractérisée en ce que** tant la première pièce profilée (212) que l'au moins une seconde pièce profilée (213a, 213b) de l'élément de couplage (211) présentent des premiers moyens de fixation (219) sous la forme de perçages complémentaires afin de fixer les potences de liaison (210) au moyen de vis ou de boulons (220), en particulier sous un angle variable, tant à la première pièce profilée (212) qu'à l'au moins une seconde pièce profilée (213a, 213b) de l'élément de couplage (211).

9. Machine de distribution selon l'une quelconque des revendications 1 à 8, **caractérisée en ce que** au moins certaines potences de liaison (210) présentent des sections de fixation terminales (210a) qui servent à leur fixation, en particulier amovible, aux premiers moyens de fixation (219) des éléments de couplage (211), les sections de fixation (210a) des potences de liaison (210) présentant en particulier des perçages.

10. Machine de distribution selon l'une quelconque des revendications 1 à 9, **caractérisée en ce que** les éléments de couplage (211) présentent en outre des nervures de renforcement (221) qui s'étendent en particulier essentiellement perpendiculairement aux deux longerons (206, 207, 208, 209) de la rampe (200) qui y sont reliés.

11. Machine de distribution selon l'une quelconque des revendications 1 à 10, **caractérisée en ce que** au moins certains tronçons terminaux de conduite de transport (37a) des conduites de transport (37) sont guidés au moins par tronçons à l'intérieur de la section transversale formée par les longerons (206, 207, 208, 209) de la rampe (200).

12. Machine de distribution selon la revendication 11, **caractérisée en ce que** au moins certains éléments de couplage (211) présentent en outre des seconds moyens de fixation (224) qui servent à la fixation, de préférence amovible, de pièces de guidage (222) pour les tronçons terminaux de conduite de transport (37a) des conduites de transport (37) portés par la rampe (200) à l'élément de couplage (211), les pièces de guidage (222) étant en particulier réalisées essentiellement en forme de plaque avec une pluralité d'ouvertures de guidage (223) qui servent à recevoir un tronçon de conduite de transport respectif (37a), les seconds moyens de fixation (224) des éléments de couplage (211) présentant
- des perçages pour la fixation des pièces de guidage (222) au moyen de vis ou de boulons ; et/ou
- des fentes complémentaires par rapport à la section transversale des pièces de guidage (222) en forme de plaque pour la réception par complémentarité de forme des pièces de guidage (222) en forme de plaque.

13. Machine de distribution selon l'une quelconque des revendications 1 à 12, **caractérisée en ce que**
- les longerons (206, 207, 208, 209) de l'au moins une rampe (200) présentent une section transversale polygonale, en particulier quadrangulaire, et/ou
- au moins les longerons (206, 207, 208, 209), en particulier tant les longerons (206, 207, 208, 209) que les potences de liaison (210), de l'au moins une rampe (200) sont formés par des profilés creux.

14. Machine de distribution selon l'une quelconque des revendications 1 à 13, **caractérisée en ce que**
- au moins les longerons (206, 207, 208, 209), en particulier tant les longerons (206, 207, 208, 209) que les potences de liaison (210), de l'au moins une rampe (200) sont fabriqués principalement en une matière plastique renforcée de fibres ; et/ou
- les éléments de couplage (211) sont fabriqués en métal, en particulier en métal léger.

15. Machine de distribution selon l'une quelconque des revendications 1 à 14, **caractérisée en ce que** l'au moins une rampe (200) comprend une pluralité de segments de rampe (201, 202, 203, 204) articulés de manière pivotante les uns aux autres.
